# DEMANDE DE BREVET EUROPEEN

(11) **EP 2 141 324 A2**
(43) Date de publication de la demande: **06.01.2010**
(21) Numéro de dépôt: 08075576.2
(22) Date de dépôt: 25.06.2008
(51) Int. Cl.: F01B 29/02, H02K 49/10, H02K 53/00

(54) **Moteur hybride sous l'effet d'une pompe à vide ou hydraulique ou sous l'effet des aimants permanent et d'une pompe à vide ou hydraulique pour production chaffage/climatisation et électrique**

(30) Priorité: 11.04.2008 FR 0802021; 24.04.2008 FR 0802309; 09.06.2008 FR 0803200
(71) Demandeur: Strzyzewski, Patrick Marcel, 62630 Etaples sur Mer (FR)
(72) Inventeur: Strzyzewski, Patrick Marcel, 62630 Etaples sur Mer (FR)

(57) **Abrégé**

Moteur temporel à variation de vitesse dont la particularité principale est basé sur le principe de la thermo dynamique, en utilisant le vide par succion, en aspirant les pistons, vers le point mort haut et bas (PMH et PMB), alternativement avec des aimants au fer bore ou samarium cobalt à flux opposés, conjugués et complémentaires pour entraîner ce moteur en rotation. Il est bien entendu, est très important, que les aimants positionnés sur les alésages au niveau des chemises et opposés au flux magnétique de ceux positionnés sur le piston, soient du double de longueur des aimants du piston pour permettre, une poussée avec un maximum de rendement et de puissance, sans trop de perte d'énergie. Ce moteur hybride est adaptée à tous les types de moteur et de carburant. L'avantage et l'utilisation du vide dans ce mode de fonctionnement permettent de provoquer l'action du vide sur chaque piston, à chaque tour de vilebrequin et aussi bien en phase de montée ou descente du piston vers le point mort haut ou le point mort bas. On exerce donc une action de succion sous l'effet du vide, qui joue alors le rôle de turbo compresseur, sur tous les pistons. Comme à chaque tour de vilebrequin on a deux pistons qui sont en point mort haut alors que les deux autres ce trouvent en point mort bas, l'action du vide s'exerce sur les deux pistons qui montent et les deux qui descende à chaque tour, donc sur deux tours on exerce une action sous l'effet du vide sur huit pistons, plus l'action soumise par la combustion interne de tous les pistons sous l'effet du carburant utilisé et du type de moteur. De par ce principe on agit et multiplie notre force sur les pistons à raison de quatre poussées et huit forces d'aspiration et de sussions sur huit pistons. Cela permet d'améliorer le rendement du moteur, sa puissance, son couple, sa nervosité, son économie d'énergie, sa vitesse de rotation en tour/mn et surtout d'être moins polluant, donc écologique et de répondre aux normes en vigueurs définies par l'Europe.

## Description

La présente invention fig. A 1.1/18 à 6.6/18 porte sur un moteur deux temps de bateau à variation de vitesse, doté d'un vilebrequin, de bielles, de pistons, d'une culasse, d'un arbres à cames, d'un moteur hydraulique ou électrique rotatif pas à pas qui transformeront les mouvements rotatifs en mouvements transversaux pour donner en sortie de vilebrequin un mouvement rotatif ralenti, accéléré ou décéléré suivant les positions données dans l'espace temps aux points mort haut et bas (PMH et PMB) des pistons qui peuvent travailler en ligne, en vé ou même en étoile pour permettre un équilibrage du moteur sur les positions des pistons et des bielles au tour des paliers du vilebrequin en position mort haut et bas (PMH et

PMB) pendant le fonctionnement et dans un espace temps donné, suivant d'autres types de moteur à x cylindre ou de x forme. Une pompe à vide est couplée en direct sur l'arbre creux cannelé du vilebrequin, elle permettra de charger un accu de vide ou d'alimenter en direct les circuits du vide, elle peut être alimentée pour fonctionner par toutes les sources d'énergie possible extérieurs. Ce système et procédé remplacera le turbo compresseur et permettra d'apporter au moteur à un temps et une position donnés en point mort haut ou bas accéléré (PMHA ou PMBA) une énergie et propulsion supplémentaire au mouvement rotatif du moteur, donc une puissance plus importante. L'énergie est le principe de base du moteur et il sera fourni aussi par des flux magnétiques propulseurs appelés aimants (néodyme au fer bore ou samarium cobalt), répartis et synchronisés de manière à donner un mouvement alternatif ralenti, accéléré ou décéléré de chaque piston à un espace temps donné. La régulation automatique des distances entre les flux magnétiques propulseurs est étudiée et définie par le principe de fonctionnement qui est conçu ici par deux pistons plongeurs coulissant l'un dans l'autre en mouvements alternatifs transversaux opposés, mouvement donné pour l'un par l'arbre à cames et la position de ces cames , définie par un moteur hydraulique ou électrique rotatif pas à pas ou d'un diviseur à commande manuelle ou tout autre moyen de commande et de l'autre piston dont le mouvement est donné par la résultante et les composantes des forces des flux magnétiques propulseurs qui en découlent et permettent la rotation du vilebrequin, dont les aimants à flux magnétiques propulseurs opposés (rep4,7,8 et 10 de la fig. A n°1.1/18) agissent sur leurs vis à vis aimants (rep101, 6,9 et 109 de la fig. A n°1.1/18) de manière à rendre fonctionnel et dynamique le système, en respectant judicieusement toutes les positions des aimants par rapport aux phases de travail du moteur, aux fins de générer les forces résultantes et composantes des flux magnétiques propulseurs opposés suivant les pôles des aimants qui se repoussent entre eux. Il est bien entendu que les réglages seront réalisés de manière que les aimants se chevauchent seulement sur les ¾ de leurs vis à vis aimant à pôles opposés, de manière à provoquer la propulsion dans le sens ou le mouvement est attendu pour assurer le mouvement en translation qui va se transformer en rotatif. Ce chevauchement varie continuellement passant d'un état minimum à maximum, ce qui fait varier les forces engendrées par les aimants sur la vitesse du moteur. Ce procédé de deux pistons plongeurs coulissant l'un dans l'autre, dans une chemise, donne la possibilité et l'avantage sous l'action de l'arbre à came en rotation qui joue le rôle d'accélérateur en faisant varier la position transversale du piston plongeur rep3, qui bénéficient ainsi de deux types de propulsion en point mort haut et bas (PMH et PMB), L'effet de vide est fourni par une pompe à vide, une installation permet d'assurer la distribution, la commande, la détection et la réserve du vide vers les pistons. Après chaque phase d'action du vide en PMH et PMB sur les pistons, une mise à l'air libre des circuits est assurée, pour annuler le vide et régénérer en air les cavités creuses conçues dans les pistons en aluminium qui vont permettre leurs succions par des orifices et des segments étanches positionnés de part et d'autre de la jupe des pistons et des deux cavités creuses étanches en position supérieure et inférieure dans le piston. Les cavités creuses pourront être indépendantes l'une de l'autre dans le fonctionnement du vide et de l'air libre ou communiquer entre elles pour permettre l'aspiration du vide et de l'air libre en continu sur une extrémité ou l'autre suivant l'action du vide en PMH ou PMB. A chaque tour de vilebrequin sur un quatre cylindres, deux pistons se trouvent en PMH, alors que les deux autres sont en PMB. L'action du vide s'exerce sur les deux pistons en PMH et PMB, simultanément et inversement à chaque tour de vilebrequin, ce qui est un sérieux avantage, pour augmenter le rendement, la puissance, la nervosité et le nombre de tour par minute du moteur l'effet du vide joue alors le rôle d'un turbo compresseur, en assurant un refroidissement naturel des pistons, il en est de même pour le moteur deux temps ici décrit. La seule perte étant celle de l'installation et de la pompe à vide qui fait trois chevaux. A la différence du moteur thermique à quatre cylindres, ou la compression et l'explosion de chaque piston se fait suivant l'ordre 1-3-4-2 sur deux tours de vilebrequin, l'effet du vide lui s'exerce à chaque tour sur tous les pistons, aussi bien en montée qu'en descente. Cela permettra donc de faire des économies d'énergie, sans pollution. Deux orifices sont positionnés avec précision sur la chemise suivant chaque phase de travail des pistons et permettront le cheminement du vide vers les circuits PMH et PMB, par deux tuyauteries soudées sur la chemise à l'emplacement des orifices correspondants. Ce cycle se répétera suivant chaque tour de vilebrequin de la même manière et en continu ou seul la vitesse de rotation variera suivant le ralenti, l'accéléré et le super accéléré ou aussi en associant l'accéléré et le super accéléré, c'est à dire l'énergie qui est le vide et les flux magnétiques propulseurs opposés fonctionnant ensemble et en continu suivant le principe du ralenti, de l'accéléré et du décéléré. L'énergie thermique que produisent tous les éléments mécaniques du moteur par frottement et rotation est récupérée par un circuit de refroidissement (échangeur thermique) en position basse du moteur, pour alimenter une unité de chauffage centrale et une production d'eau chaude sanitaire dans tous les domaines. Ce moteur pourra le cas échéant faire tourner une installation pour produire de l'électricité. On se rend compte du potentiel énorme du vide dans le fonctionnement d'un moteur, en association avec l'énergie des flux magnétiques propulseurs qui peuvent se cumuler avec d'autres énergies comme l'air avec le compresseur et l'eau, l'huile avec les pompes. Ce procédé par la résultante et les composantes des forces des flux magnétiques propulseurs est utilisé dans le domaine des cycles à deux roues ou l'on transforme de la même manière un mouvement transversal en mouvement rotatif par rapport à un axe de pédalier et son excentrique qui transforme ce mouvement par l'intermédiaire d'un appareil mécanique à flux magnétiques propulseurs définis identique à l'application du moteur temporel à variation de vitesse.

L'on connait déjà différents types de moteur, les agencements du type cité qui découlent par exemple, des documents fig. A n° 1.1/18 ou encore des fig. A n° 2.2 à 6.6/18 représentant les fonctionnements d'ensemble des systèmes d'application décrits, ils permettent de transformer et transmettre un mouvement transversal à des pistons pour obtenir en sortie un mouvement rotatif d'un vilebrequin, souhaitable dans de nombreuses applications pour permettre d'entraîner en rotation, n'importe quel appareil ou machine qui demande à tourner pour fournir un travail, mais qui ne peut pas le faire seul. Ce procédé de moteur fournit l'énergie complémentaire par une pompe à vide, la capacité et la puissance de cette énergie stockée par cette pompe est utilisé comme un turbo compresseur pour obtenir une puissance complémentaire à un temps donné du fonctionnement et de la position du piston en point mort haut et bas (PMH et PMB). L'énergie de base permettant de faire tourner la machine est donnée par la résultante et les composantes des forces des flux magnétiques propulseurs. Utilisés et placés judicieusement et avec précision pour obtenir une rotation équilibrée du moteur, une rotation au ralenti, en accéléré ou en décélération. L'inconvénient mais aussi l'avantage de ces flux magnétiques propulseurs, c'est que l'interchangeabilité de ces éléments pourra se faire sans problème au moment voulu soit sur le moteur ou réaliser un échange standard, l'avantage de ce procédé et type de moteur, est de ne pas être polluant, écologique, silencieux et de conjuguer puissance et autonomie. L'avantage n'on négligeable aussi de ce type de moteur est de pouvoir récupérer l'énergie thermique que tous les éléments mécaniques produisent par frottement et rotation, l'élaboration du circuit de refroidissement tel que réalisé dans le système par la circulation d'une huile très fluide récupérera les calories thermiques que l'on utilisera pour alimenter et chauffer une unité de chauffage central et une production d'eau chaude sanitaire. L'inconvénient mais relative, c'est que toute cette technique demande l'élaboration d'un moteur avec des structures d'études et des investissements importants ou en place, mais pas impossible, tout à un coût, mais la conception, la technique, les besoins et les résultats attendus et restitués de ce principe d'énergie dans la situation et le contexte actuel de la planète terre par rapport à la demande croissante du pétrole, qui ne peut pas être comblé par la production actuelle et le manque de gisement, devenu de plus en plus rare ou difficilement exploitable, donc très chers, vaut la peine d'être exploité et commercialisé dans tous ces domaines.

Le problème que la présente invention se propose de résoudre, réside dans la conception d'un moteur fonctionnant sans combustible avec une énergie propre, une autonomie et une puissance qui peut rivaliser avec le moteur thermique essence, diesel ou gaz, mais dans d'autres domaines comme les éoliennes pour fournir de l'électricité, le chauffage, mais aussi la climatisation pour les habitations et l'industrie des trains et des tramways de la nouvelle génération, cela réside dans l'amélioration des énergies renouvelables et écologiques de manière à contribuer à la protection de la terre en installant de manière simple et sur un espace réduit avec des investissements bien fondés et peu coûteux, le dispositif de moteur temporel à variation de vitesse associé aux machines qu'il entraînera pour fournir de l'énergie sous différentes formes pour éviter les inconvénients évoqués des agencements connus du moteur thermique conventionnel sur la pollution et le réchauffement climatique. Il est bien entendu que tous les types de moteur, de tous les types de carburants peuvent être utilisés pour élaborer le système MTVV, ici utilisé sur un moteur de bateau deux temps. Ce concept résout et améliore aussi les conditions de déplacement en cycle à deux roues des personnes ayant un handicap physique ou du à une maladie. Il permet donc d'économiser les matières premières, comme le pétrole, le gaz et de diminuer à long terme l'utilisation du nucléaire et de rendre autonome chaque habitation dans ces besoins d'électricité, de chauffage et de production d'eau chaude sanitaire. Il se propose donc de résoudre de nombreux problèmes dans différents secteurs d'activité.

Dans l'invention, la solution de ce problème consiste, pour un moteur temporel à variation de vitesse, conjuguant puissance et autonomie, pour un moteur de type cité, à prévoir deux pistons disposés en opposés pour transformer un mouvement rotatif en sortie de vilebrequin sensiblement égal sans trop de pertes de rendement. On peut équiper ce moteur d'un nombre d'ensemble de pistons indéterminé en ligne, en vé ou en étoile suivant les encombrements et les espaces déterminés par le type de moteur. Cela consiste aussi à prévoir un circuit de refroidissement pouvant être utilisé en chauffage et en production d'eau chaude externe ou en circuit de lubrification interne du moteur. Ainsi que deux énergies, propres au fonctionnement du moteur, voir un circuit utilisant le vide stocké dans un ou des accus ou en direct par une pompe à vide et la résultante et les composantes des forces des flux magnétiques propulseurs fournies par des aimants, qui sont utilisés pour permettre son fonctionnement. D'ou un arbre à cames avec des cames excentrées en lignes qui agissent sur les pistons par l'intermédiaire d'un moteur hydraulique ou électrique rotatif pas à pas ou ici d'un diviseur manuel, commandé et programmé par l'utilisateur. Ce même piston est doté d'un aimant à flux magnétiques propulseurs opposés ayant une action axiale et d'un ensemble d'aimants à flux magnétiques propulseurs opposés ayant une action radiale, bien définie dans un espace temps donné, il est doté de deux segments extérieurs en position haute et de deux segments en position basse, pour assurer l'étanchéité et le guidage entre les différents éléments du concept mécanique. Un perçage sur ce même piston en position haute assurera la liaison avec le circuit de vide de la pompe à vide, deux aimants l'un positionné sur la chemise et l'autre sur ce piston permettront de repousser continuellement ce piston en contact avec la came excentrique de l'arbre à cames. Un perçage dans la chemise de la cavité supérieure de la culasse et de la chemise qui assure le refroidissement, permettra d'assurer la lubrification des segments qui ne peuvent pas l'être. Le piston en liaison avec la bielle du vilebrequin sera doté d'un ensemble d'éléments permettant de monter des ensembles d'aimants, l'un à flux magnétiques propulseurs opposés ayant une action axiale sur l'autre piston, il sera calibré par un perçage en son centre pour permettre le phénomène de sussions sous l'effet du vide à une position et un temps donné en point mort haut et d'un ensemble d'aimants à flux magnétiques opposés propulseurs en position supérieure ayant une action radiale bien définie dans un espace temps donné par rapport à l'aimant radial de l'autre piston en position supérieure. On retrouve un autre ensemble d'aimants à flux magnétiques propulseurs opposés sur le piston de bielle en son milieu ayant une action radiale bien définie dans un espace temps donné du point mort bas par rapport à un autre ensemble d'aimants à flux magnétiques propulseurs opposés à action radiale placés dans le corps intérieur de la chemise en position basse dans des alvéoles obtenues lors de l'usinage et du montage. Un perçage calibré (gicleurs ou autres) dans le piston en position basse communicant avec la chambre de sussions du vide communique avec un autre perçage calibré, réalisé dans la chemise en position basse pour permettre la mise à l'air de cette chambre ou l'utilisation du circuit du vide en position point mort bas par des circuits externes.

Bien que l'on puisse aussi tirer profit du circuit de refroidissement sur ce type de moteur, paraît quand même être un sérieux avantage pour une production d'eau chaude sanitaire et un chauffage central, car la conception du circuit de lubrification et refroidissement dans toute la culasse et les chemises permet de récupérer l'énergie thermique que tous les éléments mécaniques produisent par frottements et rotations, par son élaboration du circuit tel que réalisé dans le système en faisant circuler une huile très fluide qui récupérera les calories thermiques au passage, par l'intermédiaire d'un échangeur thermique pour les restituer et utiliser sous différentes formes et besoins.

Bien que l'on puisse évidement changer au besoin après un certain temps d'utilisation, tous les aimants permanent de type, néodyme au fer bore ou samarium cobalt, ces aimants sont inaltérables, résistent à des températures de 300° et la mécanique du moteur sera usée avant les aimants, qui ne perdent pas de leurs puissance et efficacité durant une vie de vingt années garantie, en respectant les règles de fonctionnements. Il est certain que cela ne pose pas de problème, car on procédera à un échange standard du moteur et de tous ses aimants étant démontables, ainsi que tous ses organes d'usures, on récupérera seulement les organes vitaux qui ne subissent pas de détérioration et d'usure. Mais il est certain que les organes mécaniques tel que roulements, joints d'étanchéité, segments d'étanchéité etc, seront usés et considérés comme n'étant plus fonctionnels avant même la fin de vie des aimants. Ce procédé de moteur garde donc son avantage fonctionnel et innovant, dont le rendement et tout à fait reconnu et assuré dans le temps sur sa rentabilité.

Dans un autre mode de réalisation de l'invention un moteur thermique ne peut pas se suffire à lui même pour fonctionner, il utilise à ce jour de l'énergie tel que le pétrole, le gazole ou le gaz, ce qui s'avère coûteux et polluant, sans compter que les ressources naturelles diminuent et on ne peut pas envisager l'utilisation du nucléaire. Mais dorénavant la résultante et les composantes des forces des flux magnétiques propulseurs opposés dépassent le rendement attendu pour résoudre ces problèmes et permettent le fonctionnement d'un moteur conjuguant puissance et autonomie, avec des avantages ne pas être polluant, silencieux et écologique.

Dans un mode de réalisation de l'invention particulièrement préféré, on associera une énergie complémentaire obtenue par une pompe à vide qui stocke cette énergie dans des accus ou branchée en directe pour la restituer au fonctionnement du moteur, ce système et procédé remplacera le turbo compresseur et permettra d'apporter au moteur à un temps et une position donné en point mort haut ou bas accéléré (PMHA ou PMBA) une énergie et propulsion supplémentaire, donc une puissance plus importante au moteur ce qui s'avère avantageux, étant donné que la pompe à vide peut tourner indépendamment. On peut donc en période de nuit ou de jour charger les accus de vide pour garantir une autonomie en continue.

Dans ce mode de réalisation de l'invention telle que décrite et particulièrement préféré au moteur thermique plus bruyant. Il en résulte une construction très simple, dont le fonctionnement est fiable, mais il a surtout l'avantage d'être silencieux de par sa conception.

L'invention est décrite plus en détail ci après à l'appui de l'exemple de réalisation exposé par extraits et en partie de manière schématique dans les différents dessins des fig. A 1.1/18 à 6.6/18 représentant une coupe transversale du moteur de bateau deux temps en position accélérée, le piston de droite est au point mort bas accéléré (PMBA) et le piston de gauche est au point mort haut accéléré (PMHA) selon l'invention qui permet d'observer le dispositif de moteur temporel à variation de vitesse faisant apparaître les différentes phases du mouvement transversal des pistons à l'intérieur des chemises fig. A 1.1/18, elle même montée dans la culasse fig. A 1.1/18 rep27 qui représente une coupe transversale de l'ensemble de la culasse, dotée de deux pistons en ligne. Un arbre à cames fig. A 1.1/18 rep30 doté de deux cames excentriques alignées rep30 (A, B,) commandé en rotation par un diviseur manuel, monté sur un axe cannelé de l'arbre à cames et fixé sur la culasse par des éléments de fixations et de centrages fig. A 1.1/18 qui permettront de transmettre et donner une position transversale bien déterminée aux pistons rep3 gauche et droit, suivant la demande de l'utilisateur en point mort haut ralenti, accéléré ou décéléré, pour donner une température voulu, plus le moteur tourne vite et plus on élèvera la température. L'ensemble de ces combinaisons de mouvements transversaux permettra de les transformer en sortie de vilebrequin en un mouvement rotatif. L'invention décrite plus en détail en reprenant chaque élément mécanique exposé par les dessins, permettra de cerner et de rendre fonctionnel l'ensemble de l'invention fondée sur les fig. A 1.1/18 à 6.6/18 du moteur temporel à variation de vitesse. Descriptif du piston rep1 fig. A 1.1/18 et 3.3/18 pour définir ces phases de travail et ces opérations d'usinage. Tout d'abord ce piston est doté d'une chambre rep112 avec un filetage qui recevra la bague percée calibrée jouant le rôle de gicleur rep108 fig. A 1.1/18, qui sera en laiton, elle même recevra les aimants percés rep109 fig. A 1.1/18 bloqués par un circlips et qui auront un perçage de 5mm communiquant aussi avec cette chambre rep112 qui elle-même communiquera avec la chambre rep107 par l'intermédiaire d'un perçage calibré ou d'un gicleur rep113, cette dernière chambre aura un perçage calibré ou un gicleur rep47 qui communiquera avec les circuits percé rep55, 56, 79 et 25, suivant la position travail en PMH ou PMB du piston, tous ces circuits seront suivant le cas, soit en communication avec le circuit de vide ou de mise à l'air libre. Le volume des chambres est calculé en fonction de tous les paramètres de vitesse de rotation du moteur, de la pompe à vide, des débits fournis par cette dernière, des calibrages des circuits et des cadences des phases de travail des pistons. Ces perçages calibrés très petits permettront d'exercer une sussions du piston par le vide dans la phase finale de point mort haut accéléré (PMHA) ou point mort bas accéléré (PMBA) pour apporter tel qu'un turbo compresseur une puissance complémentaire non négligeable, par l'intermédiaire des circuits percés rep50,67, 76, 77, 113, 47, 55, 56, 79 et 25 fig. A 1.1/18 qui correspond au circuit de stockage du vide dans des accus ou en direct par la pompe à vide ou à la mise à l'air libre de ces mêmes circuits suivant la phase de travail du piston en PMH ou PMB. Mais il est bien entendu que ces deux circuits vont s'ouvrir ou se fermer en même temps à chaque phase de travail. L'assemblage de cette pièce rep108 fig. A 1.1/18 permettront de loger entre elle et un circlips un aimant ou des aimants en couronne percés en son centre par un trou de 5mm et montés de manière que les champs magnétiques se repoussent avec l'aimant ou les aimants en couronne percés calibrés rep10 fig. A 1.1/18 et 2.2/18. A une distance précise et bien définie en position supérieure du piston, un usinage cylindrique en forme de queue d'aronde recevra les aimants rep6 fig. A 1.1/18 qui auront une forme en biseau conique de manière à être bloqués au montage sur le piston rep1, ces derniers seront chargés tel un barillet par les rainures rep107, qui auront été usinées, ces dernières seront rebouchées une fois les aimants mis en position avec de l'étain ou de la résine pour éviter que ces derniers bougent. Les aimants rep6 fig. A 1.1/18 et fig. A 3.3/18 travailleront en flux magnétique opposé avec leurs vis-à-vis rep7 du piston plongeur rep3 fig. A 2.2/18 en phase point mort haut, Il est bien entendu, est très important, que les aimants rep4 et 8 positionnés sur les alésages au niveau des chemises rep2 et 5 et ceux rep7 du piston plongeur rep3 et qui sont opposés au flux magnétique des aimants rep6 et 9 positionnés sur le piston rep1, soient du double de longueur des aimants du piston pour permettre, une poussée avec un maximum de rendement et de puissance, sans trop de perte d'énergie. Tous les aimants sont placés à une position déterminée dans le concept technologique de manière à travailler avec son vis-à-vis en opposition de flux magnétique dans chaque phase de fonctionnement en position PMH ou PMB, suivant les périodes de ralenti, d'accélération ou décélération donné par la position du piston plongeur, qui est commandé par l'arbre à cames, cela permet de faire varier le chevauchement transversal des aimants, plus ou moins, générant ainsi un effort de poussée transversal, plus ou moins puissant, faisant varier de la sorte la vitesse de rotation du moteur, ce dernier faisant tourner une pompe à vide qui restitue son énergie, l'énergie fourni à la pompe à vide pour tourner, peut provenir d'une source extérieur pouvant être branchée sur du 230V, alimentée par une batterie, par un alternateur et un transformateur 12V /230V, des capteurs solaires, cette pompe à vide restitue son énergie en chargeant l'énergie généré par la pompe à vide dans un réservoir de vide ou en direct. Il est bien entendu que tous les aimants seront soudés et assemblés sur les pièces respectives avec de l'étain et auront de ce fait des formes incurvées, percées ou usinées de forme concave ou divers intérieur sur leurs champs. L'action et la position des aimants rep9 sur le piston rep1 sont définies à une distance précise et bien définie en position inférieure du piston rep1 par rapport à leurs aimants rep8 à flux magnétiques opposés, prisonniers entre la culasse rep27 et la chemise rep2, pour ce qui est de la fonction technologique des aimants rep8, elle est identique à celle des aimants rep6 du piston rep1. La matière du piston rep1 sera de l'aluminium 1A-S12U3-5N3G ou autres dérivés de ce type ayant les mêmes caractéristiques mécaniques, obtenue par moulage de fonderie en carotte, une fois usiné le piston rep1 subira un traitement thermique de surface sur la calotte et la jupe de ce dernier. Deux segments étanchent en fonte acier rep18 et 19 fig. A 1.1/18 et 3.3/18 assureront l'étanchéité entre les différentes opérations, phases et chambres, ainsi que le guidage du piston dans les chemises rep2 fig. A 4.4/18 et rep104 fig. A 5.5/18. Un dernier segment rep106 dit racleur en position inférieure du piston rep1 permettra de racler l'huile de graissage et de la recycler vers l'axe de la tête de bielle et dans le bloc carter de vilebrequin. Un alésage en position inférieure du piston rep1 recevra l'axe rep24 fig. A 1.1/18 et 3.3/18 de la bielle respective rep20 fig. A 1.1/18 du vilebrequin, deux rainures logeront les joncs d'arrêts rep26 fig. A 1.1/18 et 3.3/18 pour le blocage de l'axe de bielle en translation.

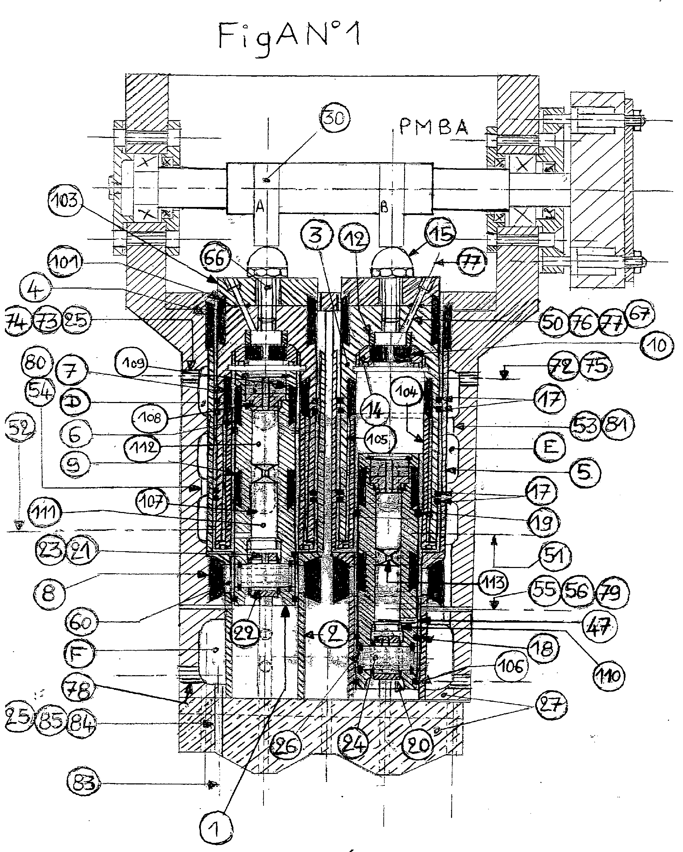

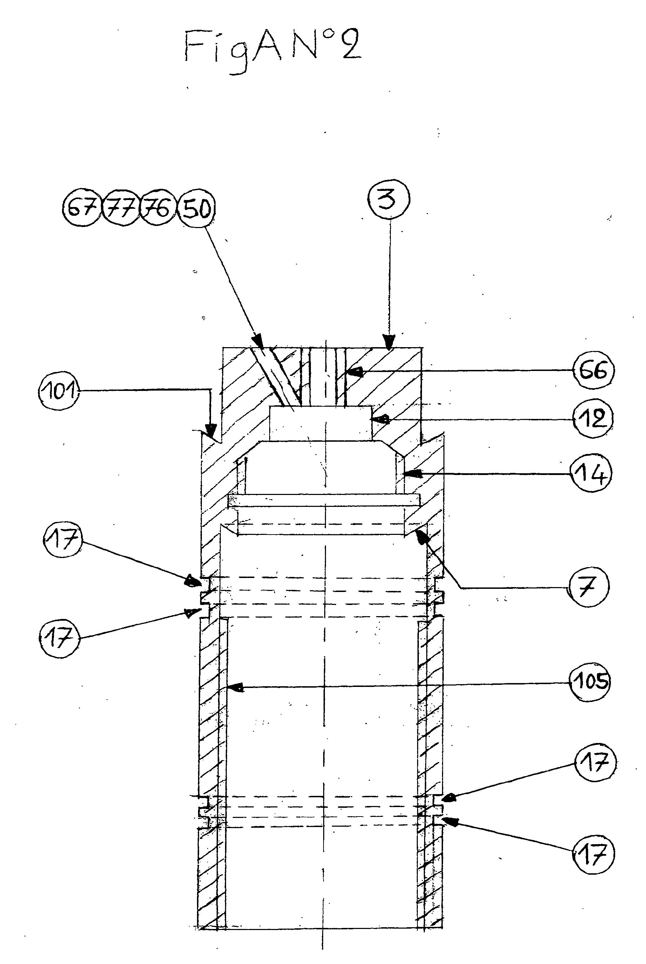

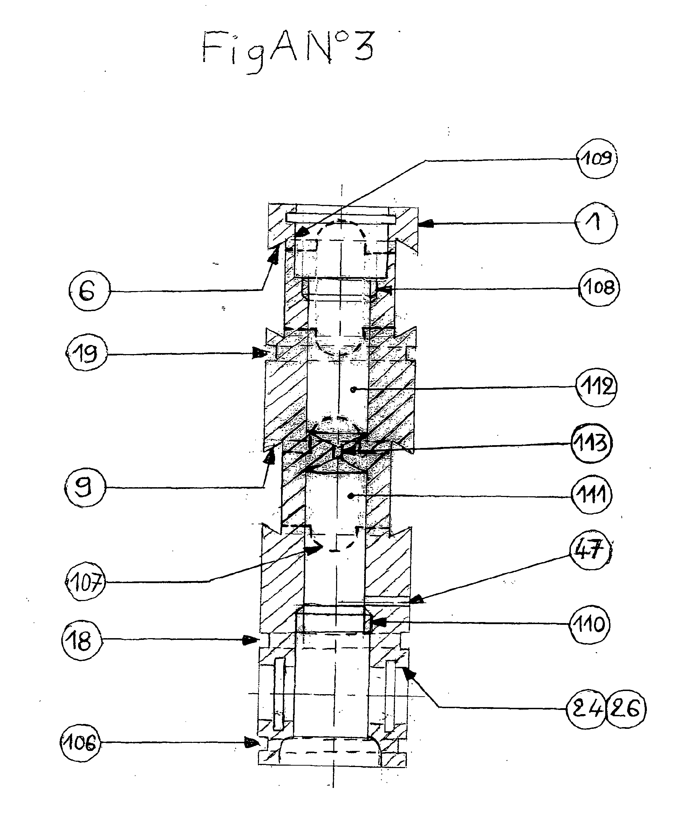

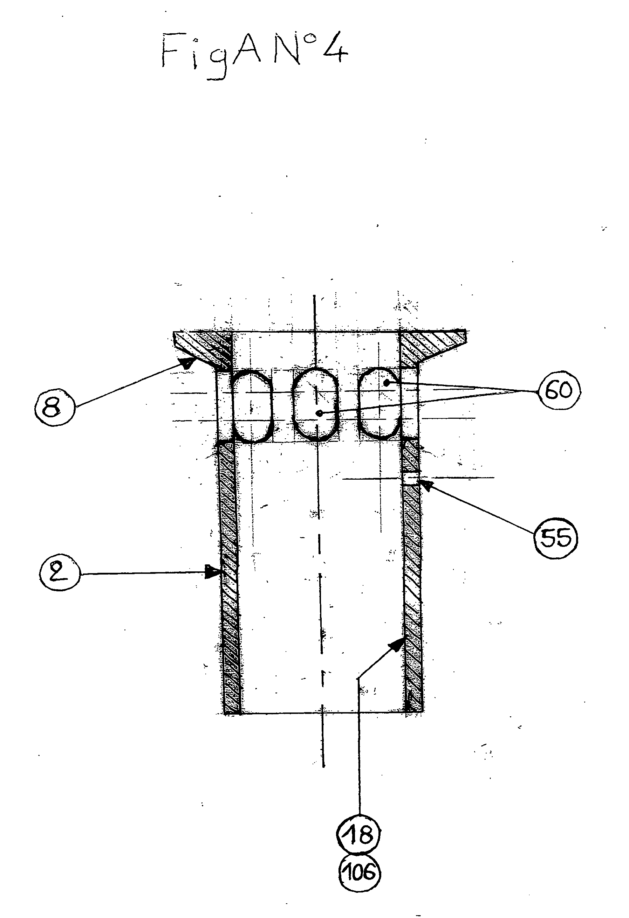

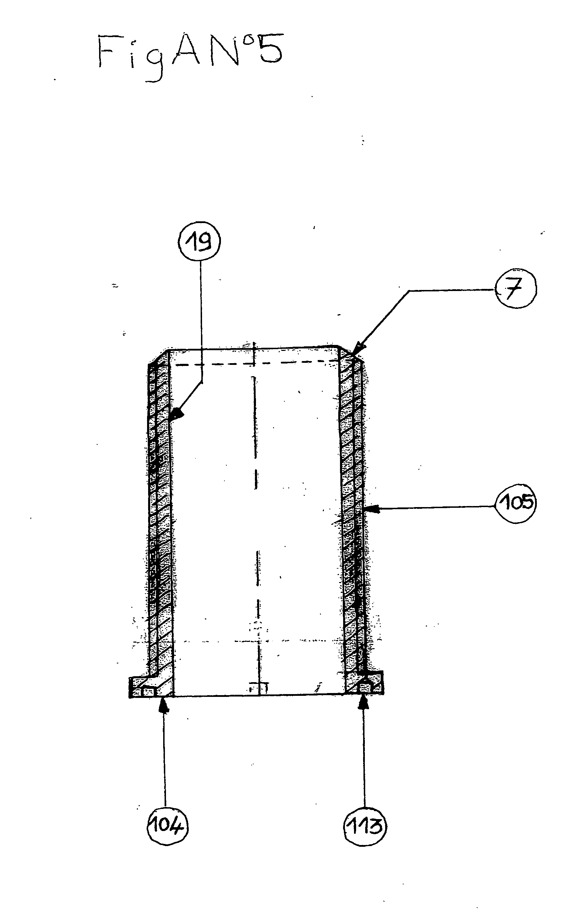

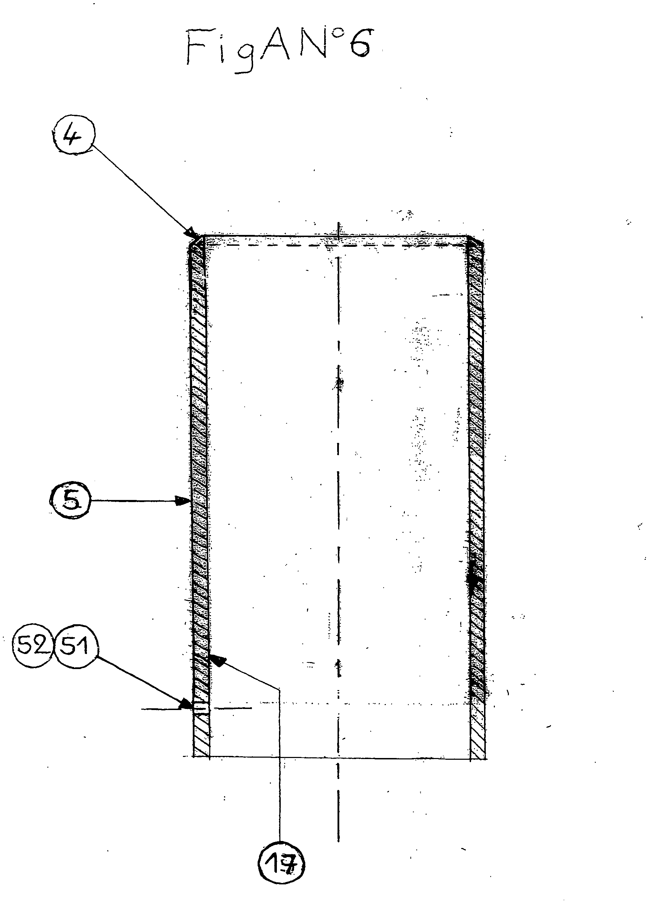

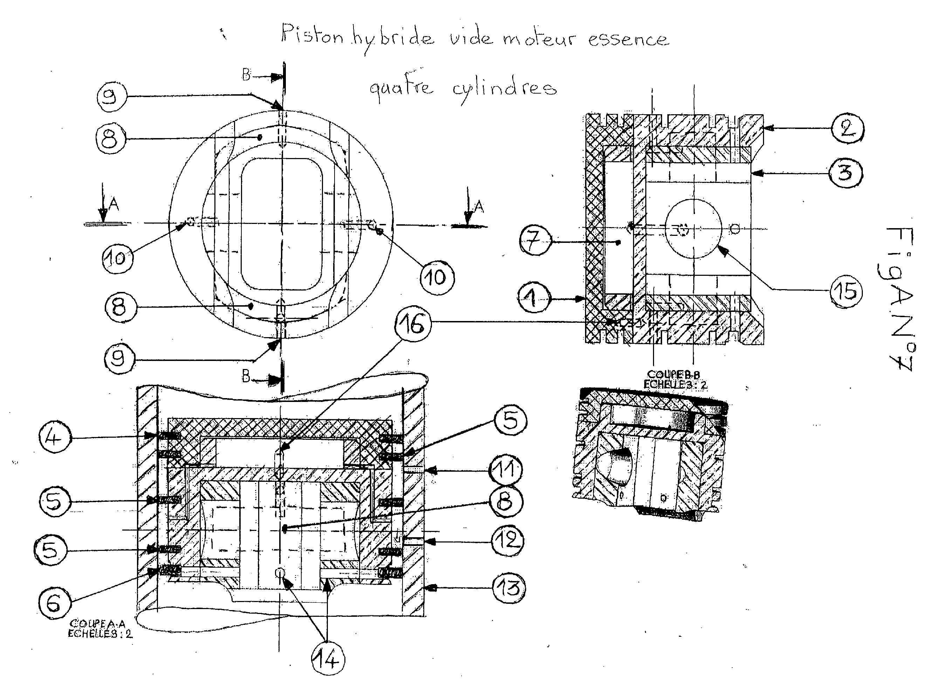

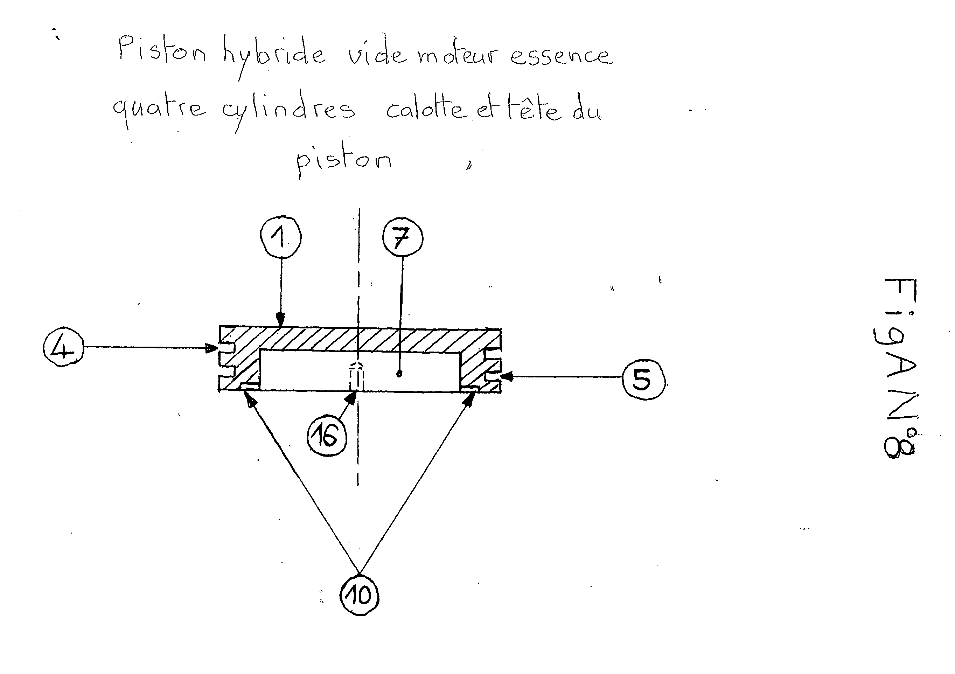

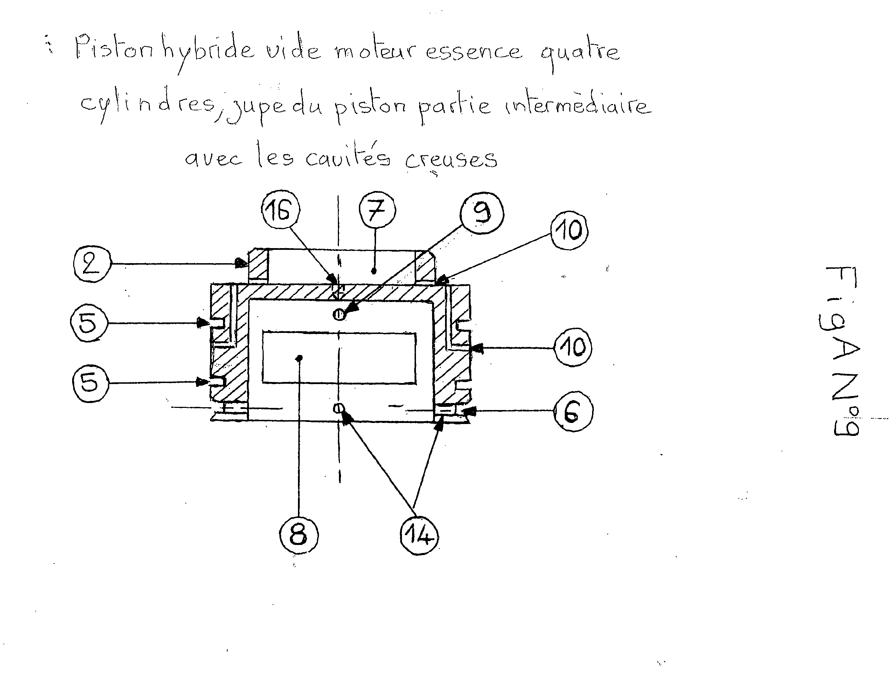

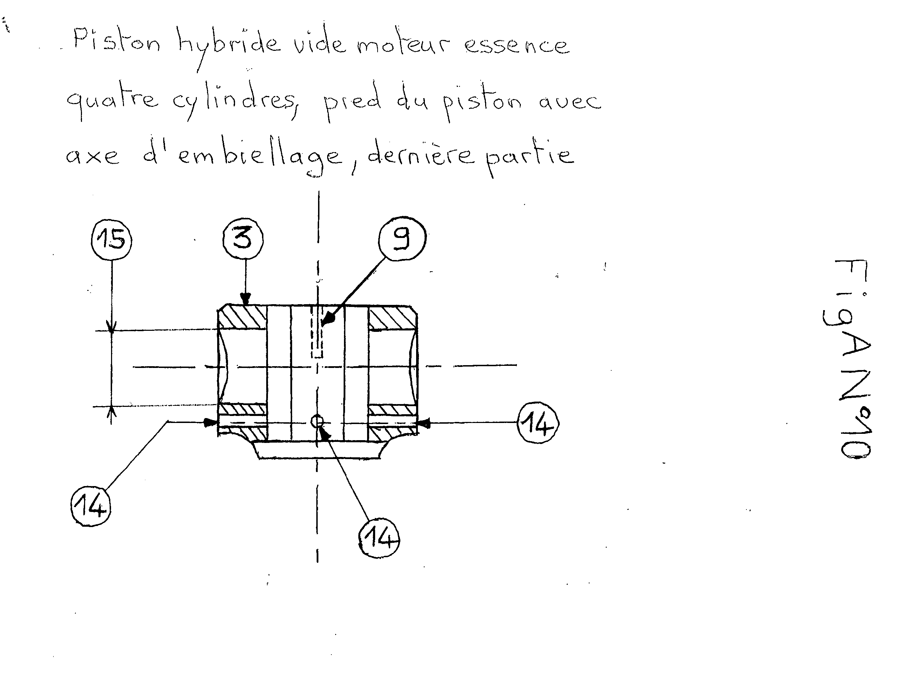

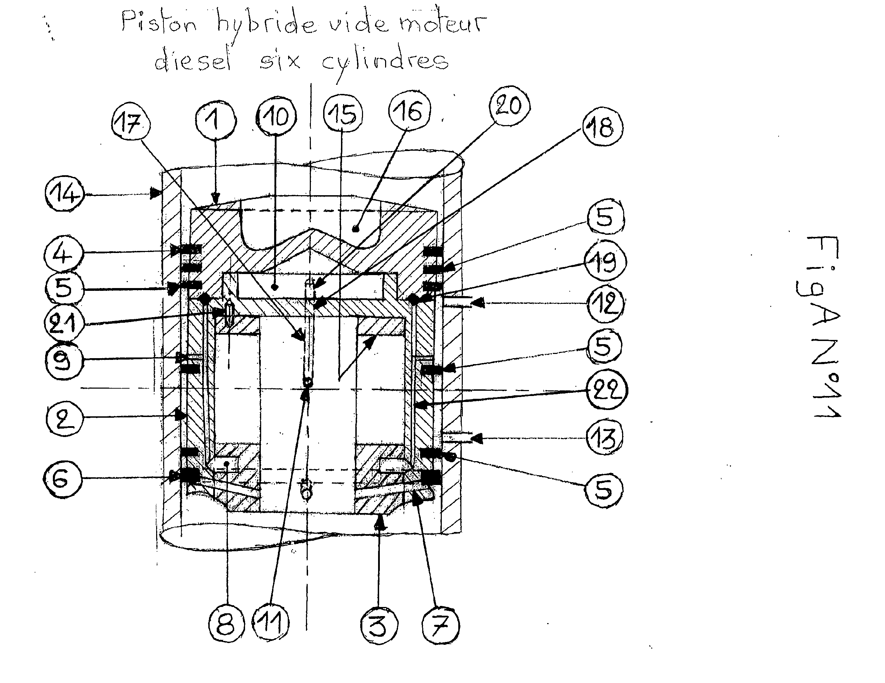

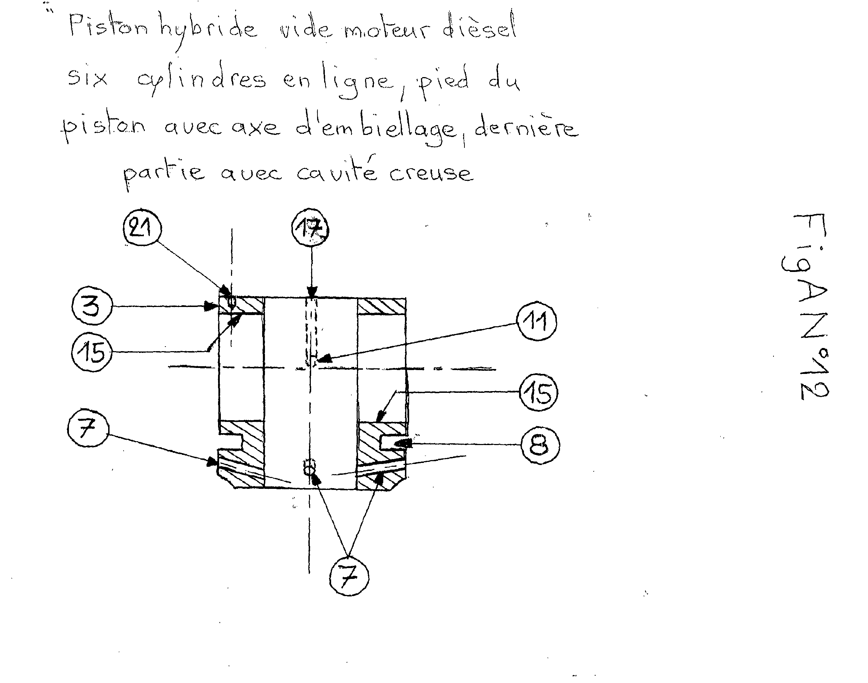

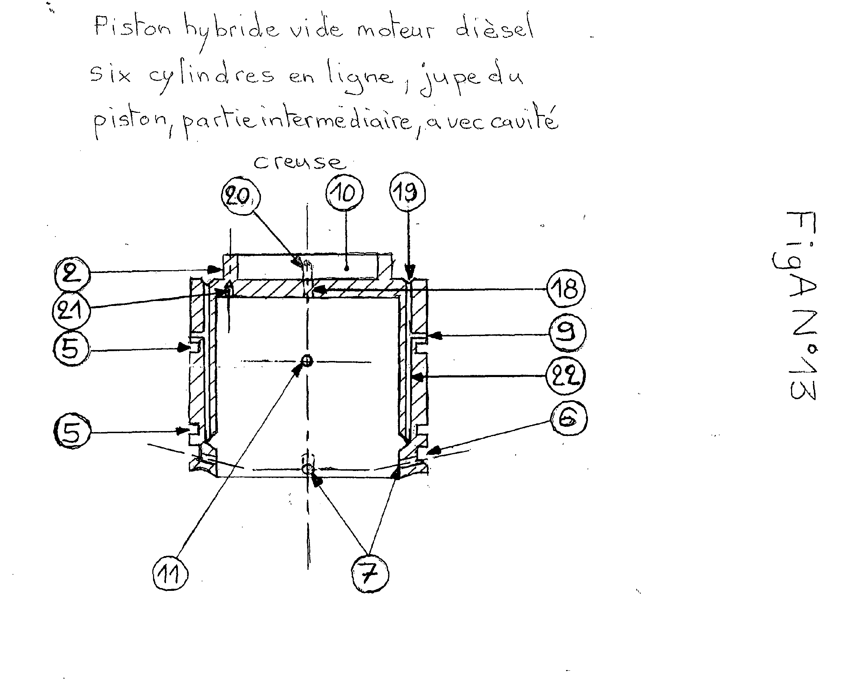

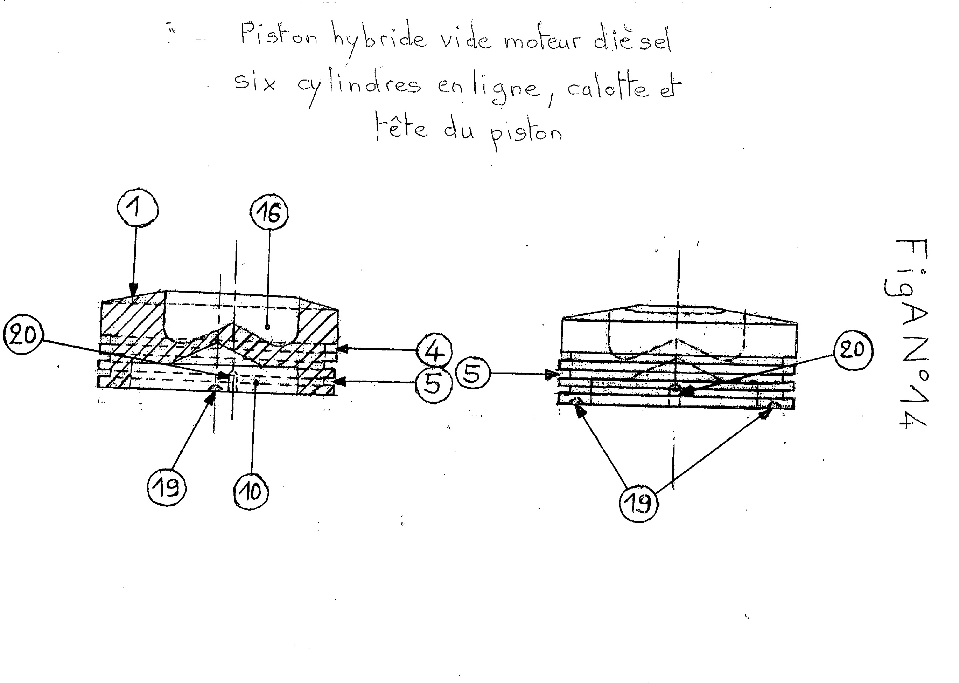

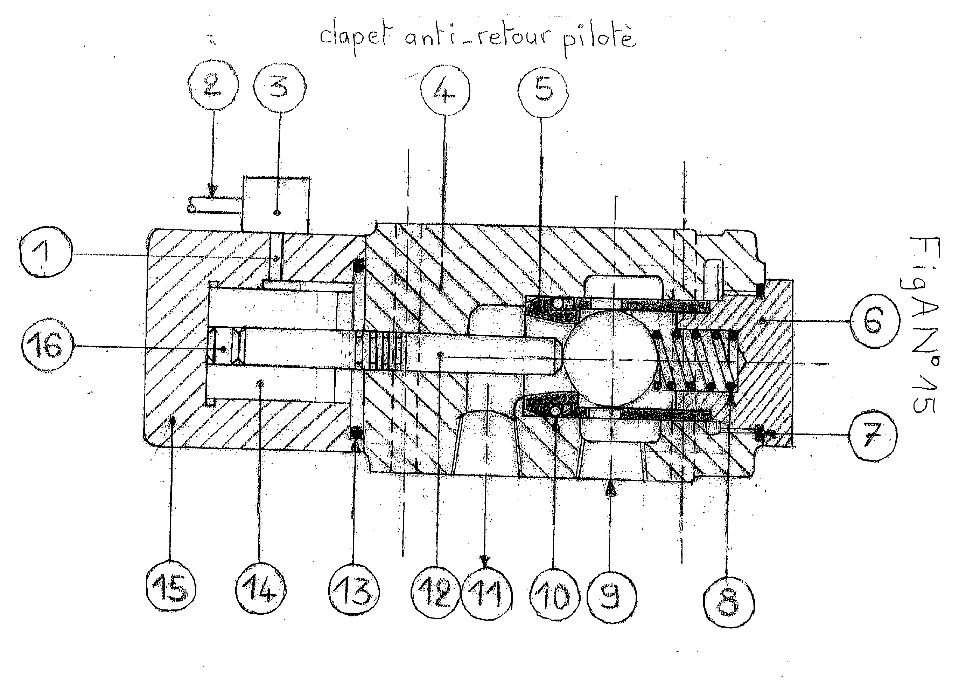

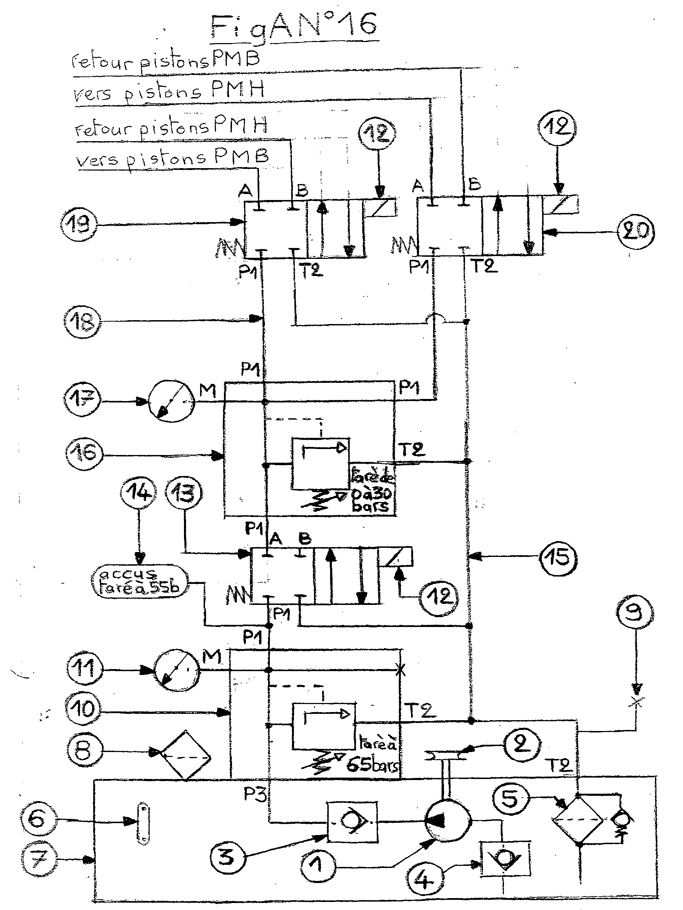

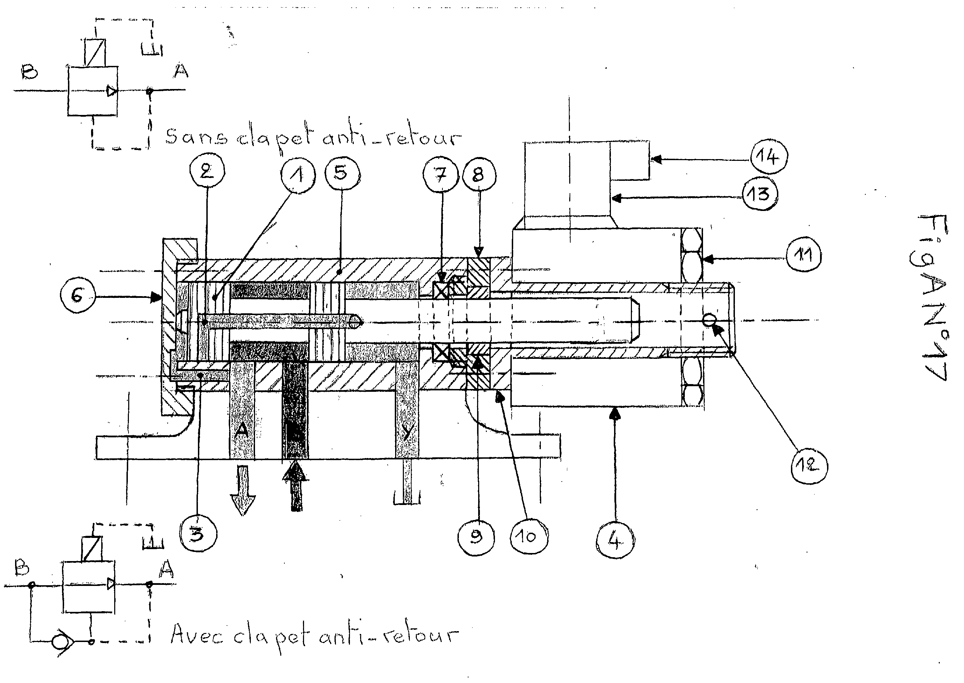

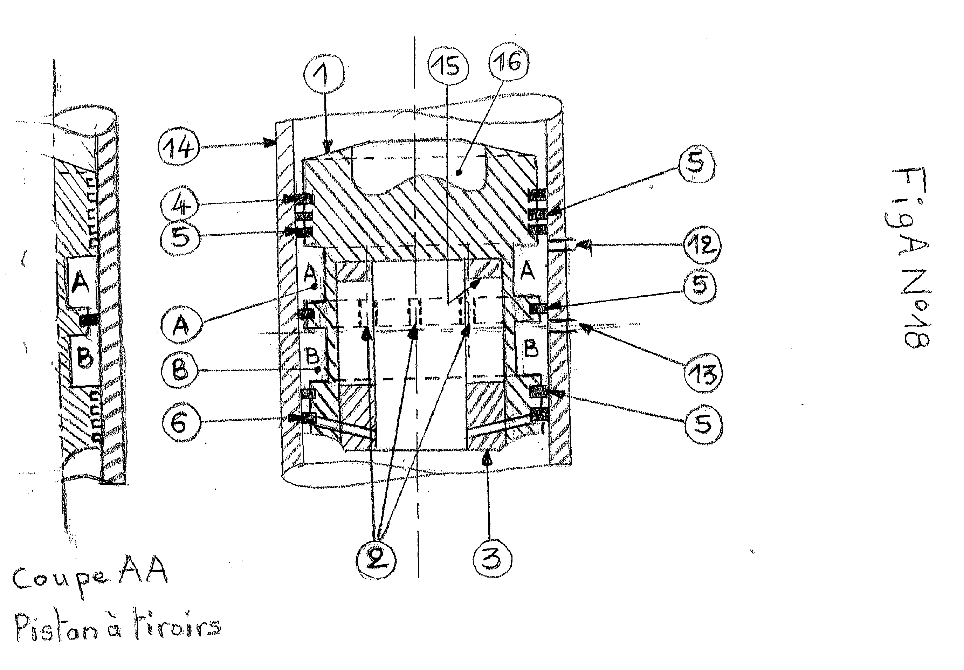

Descriptif de la chemise rep2 fig. A 2.2/18 pour définir ces phases de travail et ces opérations d'usinage, tout d'abord cette chemise sera en acier inox amagnétique, des alvéoles qui seront soient perforées, débouchantes ou obstruées rep60 recevront en leurs logements au nombre de huit des aimants individuels rep8 fig. A1.1/18 montés de manière que les champs magnétiques se repoussent avec les aimants rep9 fig. A 1.1/18, ces aimants seront soudés et assemblés dans chaque logement de la culasse rep27 avec de l'étain ou des résines telle que l'araldite ou autre. Ces aimants auront des formes en biseaux conique ou toutes autres formes de manière à se bloquer au montage de la chemise rep2 avec la culasse. Un alésage et deux segments l'un étanche et l'autre racleur rep18 et rep106, logeront et assureront le guidage du piston rep1 fig. A 3.3/18 et rep1 fig. A 1.1/18. Quatre cavités D, E, F et G creusées circulairement au tour du diamètre extérieur des chemises rep2 et rep5 seront obtenus brute de fonderie et permettront d'assurer le refroidissement et la lubrification par circulation d'une huile très fluide entre la culasse et les chemises de manière à refroidir le moteur et récupérer l'énergie thermique dissipé par les organes mécaniques, pour produire une production d'eau chaude sanitaire ou alimenter un chauffage central par l'intermédiaire d'un échangeur thermique. Deux perçages rep52 et 51 de la chemise fig. A 6.6/18 et fig. 1.1/18 communiquant avec la cavité F de la culasse rep27, permettront le passage de l'huile très fluide du circuit de lubrification vers le rep75 et 72 fig. A 1.1/18 pour assurer la lubrification des segments rep18, 19 et 106 fig. A 1.1/18 et rep17 fig. A 1.1/18. Le perçage rep50 permet d'assurer la liaison avec les perçages rep67, 76 et 77 fig. A 1.1/18 du piston rep3 et de la bague rep103 fig. A 1.1/18 et la chambre de sussions rep112 du piston rep1 fig. A 1.1/18 par l'intermédiaire du perçage calibré des aimants rep109 et de la bague rep108 qui correspond au circuit du vide qui se mettra en action à un moment bien déterminé du point mort haut accéléré (PMHA) pour apporter une puissance complémentaire jouant le rôle de turbo compresseur dans un espace temps donné très court. Les entailles en vé rep53 entre la cavité D et E et celle rep54 entre la cavité F et G permettront la circulation du fluide du circuit de refroidissement de manière homogène sur toute la surface des chemises. Les perçages calibrés rep55 et rep56 en communication avec le rep79 et 25 fig. A 1.1/18 et fig. A 4.4/18 permettront la mise à l'air libre ou la liaison avec le circuit du vide, en position point mort bas de la chambre de sussions rep 111 du piston rep1 fig. A 1.1/18 et fig. 3.3/18.

Le descriptif de la chemise rep104 fig. A 1.1/18 et 5.5/18, pour définir ces phases de travail et ces opérations d'usinage, tout d'abord cette chemise sera en acier inox amagnétique, elle sera vissée dans le piston plongeur rep3 suivant le filetage rep105 avec l'aide des ergots et d'une clé à ergots rep113. Les chanfreins rep7 de cette bague permettront de former la queue d'aronde qui recevra les aimants rep7 et assureront leurs serrages et blocages sur le piston plongeur rep3. L'alésage rep19 fig. A 1.1/18 et 5.5/18 permettra d'assurer le guidage et l'étanchéité par l'intermédiaire du segment étanche rep19 positionné sur le piston rep1. Le perçage rep55, 56 et 79 permettra d'assurer la continuité et la communication avec les circuits d'air libre et de vide en point mort bas.

Le descriptif de la chemise rep5 fig. A 1.1/18 et 6.6/18, pour définir ces phases de travail et ces opérations d'usinage, tout d'abord cette chemise sera en acier inox amagnétique, elle sera montée très légèrement dure sur la culasse rep27. Les chanfreins rep4 de cette bague permettront de former la queue d'aronde qui recevra les aimants rep4 et assureront leurs serrages et blocages par rapport à la culasse rep27 et la bague de serrage. L'alésage rep17 fig. A 1.1/18 et 6.6/18 permettra d'assurer le guidage et l'étanchéité par l'intermédiaire des segments étanches rep17 positionné sur le piston plongeur rep3. Le perçage rep52 et 51 permettront d'assurer la continuité et la communication entre les différents circuits de refroidissements et de lubrifications interne à la culasse et au moteur

Descriptif du piston rep3 fig. A 1.1/18 et 2.2/18 pour définir ces phases de travail et ces opérations d'usinage, tout d'abord ce piston sera en alliage d'aluminium 1A-S12U3-5N3G ou autres dérivés de ce type ayant les mêmes caractéristiques mécaniques, brut de fonderie par moulage de carotte. Un logement recevra des aimants en forme de queue d'aronde en biseau conique rep7 fig. A 1.1/18 et 2.2/18 montés et réalisés pour que les champs magnétiques se repoussent avec les aimants rep6 fig. A 1.1/18 du piston rep1 qui seront sollicités en point mort haut ralenti et accéléré pour agir en poussée sur le piston rep1 fig. A 1.1/18 et transmettre sa force pour permettre la rotation du vilebrequin. Les segments rep17 assureront le guidage et l'étanchéité avec la chemise de la culasse rep5 fig. A 1.1/18 et 6.6/18. Le logement fileté recevra une bague laiton ou aluminium standard rep14, qui elle même recevra est bloquera par serrage un aimant rep10 fig. A 1.1/18 et 2.2/18 entre une bague rep12 en laiton ou aluminium, on pourra donc régler la position de l'aimant qui sera percé en son centre au diamètre de 5mm pour permettre l'action du vide, en plaçant respectivement des bagues usinées d'un coté ou de l'autre de l'aimant, ce dernier est monté et réalisé pour que les champs magnétiques se repoussent avec l'aimant rep109 fig. A 1.1/18 du piston rep 1 qui seront sollicités en point mort haut accéléré ou ralenti, pour agir en poussée sur le piston rep1 fig. A 1.1/18 et 3.3/18 et transmettre ainsi leur force pour permettre la rotation du vilebrequin. Un embout fileté rep66 sera vissé et monté au scelle roulement dans le piston rep3 fig. A 1.1/18 doté d'un taraudage et recevra la pièce rep15 fig. A 1.1/18 cette pièce sera en acier et subira une trempe, elle aussi montée au scelle roulement. Pour ce qui est de la forme en queue d'aronde usinée cylindriquement en biseaux coniques et formée par l'assemblage de la bague de blocage rep103 sur le piston rep3 et les pièces rep66 et 15 fig. A 1.1/18, elle recevra des aimants rep101 fig. A 1.1/18 et 2.2/18 montés et réalisés pour que les champs magnétiques se repoussent avec l'aimant rep4 fig. A 1.1/18 pour maintenir le piston rep3 fig. A 1.1/18 par l'intermédiaire de la pièce rep15 fig. A 1.1/18 en contact ponctuel et permanent avec les cames A et B rep30 fig. A 1.1/18, qui elles seront aussi en acier et subiront une trempe.

Descriptif de l'aimant rep4 fig. A 1.1/18 pour définir ces phases de travail et ces opérations d'usinage, il sera positionné sur la culasse rep27 fig. A 1.1/18 suivant le logement en forme de queue d'aronde en biseau conique obtenu par l'assemblage de la chemise rep5 fig. A 1.1/18 et la bague de blocage fixée par vis rep114 fig. A 1.1/18 pour assurer le blocage des aimants rep4 fig. A 1.1/18, qui ont pour rôle principal de repousser les aimants rep101 fig. A 1.1/18 pour maintenir le piston rep3 fig. A 1.1/18 par l'intermédiaire de la pièce rep15 fig. A 1.1/18 en contact ponctuel et permanent avec les cames A et B rep30 fig. A 1.1/18.

Le descriptif de l'aimant rep6 fig. A 1.1/18 a défini son rôle sur le piston rep1 fig. A 1.1/18 par rapport à l'aimant rep7 fig. A 1.1/18 dans d'autres descriptifs ci dessus qui ont permis de définir leurs rôles respectifs l'un par rapport à l'autre. Il est bien entendu que tous les aimants en forme de queue d'aronde en biseau conique permettront leur blocage avec les pièces respectives, mais pourront avoir d'autres formes, de ce fait des petites incurvées percées ou usinées de forme concave ou autres intérieure sur leurs champs pour permettre leurs blocages, ils seront suivant les cas et les possibilités de montage, de forme en demi lune, en plusieurs aimants individuel ou en anneau suivant les types.

Le descriptif de l'aimant rep8 fig. A 1.1/18 a défini son rôle avec le piston rep1 fig. A 1.1/18 par rapport à l'aimant rep9 fig. A 1.1/18 dans d'autres descriptifs ci dessus qui ont permis de définir leurs rôles respectifs l'un par rapport à l'autre. Il est bien entendu que tous les aimants en forme de queue d'aronde en biseau conique permettront leur blocage avec les pièces respectives, mais pourront avoir d'autres formes, de ce fait des petites incurvées percées ou usinées de forme concave ou autres intérieure sur leurs champs pour permettre leurs blocages, ils seront suivant les cas et les possibilités de montage, de forme en demi lune, en plusieurs aimants individuel ou en anneau suivant les types.

Le descriptif de l'aimant rep10 fig. A 1.1/18 a défini son rôle avec le piston rep1 fig. A 1.1/18 par rapport à l'aimant rep109 fig. A 1.1/18 dans d'autres descriptifs ci dessus qui ont permis de définir leurs rôles respectifs l'un par rapport à l'autre. Il est bien entendu que cet aimant sera de forme cylindrique en anneau percé en son milieu par un trou de diamètre cinq mm pour permettre que l'action du vide puisse communiquer et jouer son rôle, leur épaisseur pourra varié suivant le mode de réglage de la distance et de la puissance requise et demandée à cet aimant par rapport à son rôle et son opposé, mais pourront avoir d'autres formes suivant les cas et les possibilités de montage, de forme en demi lune ou en anneau suivant les types présentés.

Le descriptif de l'aimant rep109 fig. A 1.1/18 a défini son rôle sur le piston rep1 fig. A 1.1/18 par rapport à l'aimant rep10 fig. A 1.1/18 du piston rep3 dans d'autres descriptifs ci dessus qui ont permis de définir leurs rôles respectifs l'un par rapport à l'autre. Cet aimant aura un perçage de 5mm en son centre, par contre la bague rep108 aura un perçage calibré et bien défini, elle jouera le rôle de gicleur avec plusieurs calibrages suivant la demande et les besoins.

Le descriptif de la pièce rep108 fig. A 1.1/18 a défini son rôle sur le piston rep1 fig. A 1.1/18 par rapport à l'aimant rep109 fig. A 1.1/18 dans d'autres descriptifs ci dessus qui ont permis de définir leurs rôles respectifs l'un par rapport à l'autre.

Le descriptif de la pièce rep15 fig. A 1.1/18 à une importance capitale, tout d'abord c'est une pièce en acier C 40 trempé, ayant un contact ponctuel avec les cames A et B rep30 fig. A 1.1/18 qui permet la liaison des commandes et mouvements entre l'arbre à cames rep30 fig. A 1.1/18. et le piston rep3 fig. A 1.1/18 et 2.2/18 définis dans d'autres descriptifs ci dessus qui ont permis de définir leurs rôles respectifs l'un par rapport à l'autre.

Le descriptif des segments fonte acier rep17, rep18 et rep19 fig. A 1.1/18 assurent l'étanchéité et le guidage des différentes pièces et éléments qui sont en mouvement entre les chemises rep2, rep5 et rep104 fig. A 1.1/18, 4.4/18, 5.5/18 et 6.6/18 et les pistons coulissants entre eux rep3 et 1 fig. A 1.1/18, 2.2/18 et 3.3/16. Les segments rep106 fig. A 1.1/18 et 3.3/18 joue le rôle de segment racleur d'huile.

Le descriptif de la bielle rep20 fig. A 1.1/18 n'a qu'une importance mécanique courante seul le respect de la lubrification par l'intermédiaire d'un perçage sur la tête de bielle et de son axe rep24 fig. A 1.1/18 par rapport à une bague auto lubrifiante qui doit être respecté, à partir du moment où la bielle à fait l'objet d'une étude spécifique en fonction des efforts à fournir suivant chaque type de moteur, à titre indicatif les joncs extérieurs rep26 fig. A 1.1/18 permettront l'arrêt en translation de l'axe rep24 fig. A 1.1/18.

Le descriptif de la fig. A 1.1/18 montre la coupe transversale de la culasse et du moteur vue de face, ainsi que l'arbre à cames rep30 et la culasse rep27, l'arbre à cames rep30 supporte principalement un effort radial suivant les cames excentriques A et B rep30 avec un mouvement rotatif. Il sera supporté radialement par deux roulements à rouleaux coniques ou autres montés en opposition et suivant des chapeaux de paliers assurant l'étanchéité avec des joints racleurs à double lèvres montés sur l'arbre à cames et des cales en acier C30 montées entre les chapeaux de paliers et le corps de culasse permettront le réglage du jeu de fonctionnement axial par usinage ou à l'aide de cales en clinquant en agissant sur leurs bagues coulissantes. L'arbre cannelé en sortie d'arbre à cames fig. A 1.1/18 recevra ici un diviseur manuel ou un moteur hydraulique ou électrique rotatif pas à pas qui seront eux mêmes fixés et centrés sur la culasse rep27 par des vis et des pieds de centrage. Les perçages taraudés rep72, 75 et 78 permettront la liaison des circuits de refroidissements et de lubrifications entre les cavités de chaque chambre et le carter de l'arbre à cames par une pompe recyclant l'huile par arrosage des cames A et B de l'arbre à cames rep30. Pour ce qui est des roulements à rouleaux conique sur l'arbre à cames rep30, ils seront lubrifiés à vie par graissage, ne faisant pas l'objet de sollicitations excessives en vitesse de rotation, mais plutôt d'efforts axiaux exercés par le piston rep3. Il est défini aussi des circuits de vide par les rep50, 67, 76 et 77 permettant la liaison et la communication de ces circuits entre les différentes chambres rep111 et 112, tous ces circuits seront reliés à des électrovannes pilotés, des clapets anti-retour pilotés ou des injecteurs pilotés, elle même en liaison avec les accus de stockage que la pompe à vide aura chargé et dont l'ouverture et fermeture sera données dans un espace temps bien précis du point mort haut accéléré (PMHA) ou du point mort bas accéléré (PMBA) suivant le cas, mettant en liaison ces circuits avec la mise à l'air libre ou le vide, quand le clapet anti-retour piloté en liaison avec les rep50, 67, 76 et 77 commande à l'ouverture le circuit de vide en liaison avec la chambre rep112, le clapet anti-retour piloté en liaison avec les rep47, 55, 56, 79 et 25 commande en même temps et au même instant l'ouverture de la mise à l'air libre en liaison avec la chambre rep111 et inversement à chaque phase du PMH ou PMB de chaque piston rep1 suivant leur position en PMH ou PMB. Pour ce qui est des rep55, 56 et 79, ils correspondent à la mise à l'air libre ou au vide vers la chambre de sussions rep107 du piston rep1 fig. A 1.1/18 par l'intermédiaire du rep47 gicleur calibré de ce même piston et des perçages calibrés très petit et rep55, 56 fig. A 1.1/18 de la chemise rep2 et de la culasse rep27. Les orifices rep79 fig. A 1.1/18 sont reliés par l'intermédiaire de raccords en laitons et tuyaux cuivre vers le clapet anti-retour piloté du circuit de vide, actionnée à un moment bien précis du point mort bas accéléré (PMBA) pour amener une puissance complémentaire tel qu'un turbo compresseur, alors que son vis à vis sera à l'air libre au même instant, dés que cet espace temps est terminé, les clapets anti-retour pilotés ne sont plus actionnées et on inverse la tendance, en ouvrant inversement les circuits. Il est bien entendu que le clapet anti-retour piloté du circuit de vide rep77 du point mort haut du piston de droite et du circuit rep47 du piston de gauche en point mort bas est le même et ouvre ces deux alimentations du vide dans le même espace temps, alors que dans le même espace temps le clapet anti-retour piloté du piston de gauche qui est en point mort bas met ce circuit rep77 à l'air libre, ainsi que le circuit rep47 du piston de droite quand il est en point mort haut et ouvre ces deux alimentations de mise à l'air libre dans le même espace temps et en même temps, il n'y a donc que deux clapets anti-retour qui gèrent simultanément les circuits du vide et de mise à l'air libre. La culasse sera en alliages d'aluminium moulés ENAB-43000(AISi10Mg) qui se moule, s'usine et se soude bien, convient en air salin, mais on peut choisir un autre type d'aluminium.

Le descriptif de l'arbre à came rep30 fig. A 1.1/18 montre sa simplicité de réalisation, il sera en acier GC40 moulé qui convient au traitement thermique avec trempe choix alternatif lorsqu'une haute résistance à l'usure est un critère déterminant, ce qui est le cas pour les cames excentriques

A et B qui seront en contact permanent et ponctuel avec les pièces rep15 fig. A 1.1/18 suivant un effort radial. Les paliers recevront des roulements à rouleaux conique et seront réalisés par usinage, un embout cannelé recevra le diviseur à commande manuel ou un moteur rotatif pour son entraînement, ce seront des cannelures à flancs parallèle de série forte véritable clavettes taillées dans l'arbre.

Le descriptif de la fig. A 1.1/18 montre les deux roulements qui permettront le montage de l'arbre à cames rep30 sur la culasse rep27. Ces deux roulements seront montés sur les paliers de l'arbre à cames et supporteront principalement des efforts radiaux. Ce sera un montage en x de roulements à contacts oblique de type roulement à rouleaux coniques, le montage nécessite un réglage du jeu de fonctionnement, il doit être effectué en agissant sur les bagues coulissantes. Ils supportent des charges radiales et axiales relativement importantes pour des mécanismes précis fortement sollicités comme ici l'arbre à cames.

Un carter de culasse viendra se rapporter sur la culasse au dessus de l'arbre à cames. Le serrage sur la culasse sera assuré par des vis suivant les perçages rep94 et des perçages taraudages dans la culasse. Un joint d'étanchéité plat de forme bien spécifique suivant le carter culasse sera en fibre de cellulose imprégnées et plastifiées à la gélatine ayant une bonne tenue aux huiles. Une rampe de lubrification par arrosage amenée par un petit tuyau cuivre venant du circuit de la pompe à huile du moteur assurera respectivement la lubrification des cames A et B de l'arbre à cames rep30 fig. A 1.1 /18 et des plots rep15 fig. A 1.1/18. Le carter recevra en sa position centrale sur un logement percé un bouchon avec une mise à l'air libre qui sera doté d'un petit filtre à air. Le carter rep42 sera en alliage de zinc moulé de fonderie sous pression et de type Zamak 3.

Le descriptif de la fig. A n°40 correspond à un bouchon plastique (polymère+adjuvants+additifs, obtenu par moulage sous pression). Le bouchon mettra à l'air libre la chambre du carter de l'arbre à cames par l'intermédiaire d'un petit filtre à air et ce bouchon fera office de remplissage d'huile lors de la vidange ou de complément éventuel entre deux vidanges.

Le descriptif de la fig. A 1.1/18 montre un aimant à flux magnétiques propulseurs rep101, opposé à l'aimant rep4 fig. A 1.1/18. Il sera en forme de queue d'aronde avec des biseaux coniques. Les aimants rep101 et rep4 se repoussent mutuellement pour maintenir plaqué le piston rep3 fig. A 1.1/18 en contact ponctuel de la pièce rep15 fig. A 1.1/18 avec les cames A et B de l'arbre à cames rep30 fig. A 1.1/18 en permanence suivant un effort suffisant par rapport au poids d'ensemble du piston rep3 fig. A 1.1/18 équipé de tous ces éléments mécaniques et des efforts pris en compte.

Nous allons maintenant prendre en compte la description du moteur hybride adaptée à tous les types de moteur et de carburant en étudiant le fonctionnement et la technologie représentée, décrite et exploitée dans les fig. A 7.7/18 à 10.10/18. La fig. A 7.7/18 représente la technologie d'un piston hybride utilisé sous l'effet et le principe du vide dans un moteur quatre cylindres. Tout d'abord on peut expliquer le rôle et l'avantage du vide et de ce mode de piston. Un moteur quatre cylindres en ligne de type essence fonctionne sous le principe d'allumage 1, 3,4 et 2, ce qui permet de dire qu'il faut deux tour de vilebrequin pour allumer et exploser tous les pistons. L'avantage et l'utilisation du vide dans ce mode de fonctionnement permettent de provoquer l'action du vide sur chaque piston, à chaque tour de vilebrequin et aussi bien en phase de montée du piston vers le point mort haut que le point mort bas. Dans le cas d'un quatre cylindres, on exerce une action de sussions sous l'effet du vide, qui joue alors le rôle de turbo compresseur, sur tous les pistons. Comme à chaque tour de vilebrequin on a deux pistons qui sont en point mort haut alors que les deux autres ce trouvent en point mort bas, l'action du vide s'exerce sur les deux pistons qui montent et les deux qui descende à chaque tour, donc sur deux tours on exerce une action sous l'effet du vide sur huit pistons, plus l'action soumise par la compression, l'allumage et l'explosion de tous les pistons sous l'effet du carburant qui est ici l'essence. De par ce principe on agit et multiplie notre force sur les pistons à raison de quatre poussées et huit forces d'aspiration et de sussions sur huit pistons. Cela permet d'améliorer le rendement du moteur, sa puissance, son couple, sa nervosité, son économie d'énergie ici l'essence, sa vitesse de rotation en tour/mn et surtout d'être moins polluant, donc écologique et de répondre aux normes en vigueurs définies par l'Europe. On va donc reprendre la description du piston fig. A 7.7/18, la coupe A-A montre qu'il est réalisé en trois parties qui sont assemblées par montage serrant bloque presse.

On a donc une première partie rep1 fig. A 7.7/18 la calotte du piston, avec sur une partie de la jupe, un segment coupe feu rep4 et un segment étanche rep5, une cavité creuse rep7 recevra par emboîtement montage bloque presse la partie rep2, un perçage rep16 recevra un pied de centrage de manière a bien assemblée et dans le bon sens les parties rep1 et 2.Deux usinages rep10 auront la forme d'un vé et seront calibrés et définis par calculs suivant les critères du cahier des charges du moteur type et des résultats à obtenir, ces orifices permettront l'acheminement du vide et de l'air libre à l'intérieur de la cavité creuse rep7. La partie rep1 formant la calotte du piston sera en aluminium 1A-S12U3-5N3G, ou autre dérivé de ce type ayant les mêmes caractéristiques mécaniques, un traitement thermique de la calotte et de la jupe sera réalisé après l'usinage pour améliorer les caractéristiques mécaniques à la dureté et à la résistance à la chaleur de fusion par rapport à l'explosion des carburants mis en compression.

La partie rep2 fig. A 7.7/18 forme la deuxième partie du piston, avec un deuxième segment étanche rep5 positionné au milieu de la jupe du piston, un troisième segment étanche rep5 est positionné sur la partie inférieure de la jupe du piston et juste derrière ce segment, un dernier segment racleur rep6 permettra d'assurer la lubrification et le raclage de l'huile, il permettra aussi d'assurer la lubrification de l'axe de la tête de bielle, par les orifices percés rep14. Les zone comprises entre les différents segments étanches permettront de définir les zones travaillant en position point mort haut et bas dans la chemise rep13, quatre perçages calibrés ou positionnement de quatre gicleurs calibrés de part et d'autre de ces zones rep9 et rep10, achemineront le vide ou l'air libre vers les cavités creuses rep7 et 8, par l'intermédiaire des orifices rep11 et 12 placés sur la chemise rep13, qui eux mêmes communiquent avec les circuits des clapets anti-retour pilotés, les électrovannes pilotés ou les injecteurs pilotés suivant les modes d'utilisations du vide et de l'air libre dans le fonctionnement et les phases de cycle du moteur et des pistons en PMH et PMB. Lors de l'assemblage de la partie rep2 sur la partie rep1 les orifices percés et calibré rep10 doivent coïncider avec ceux de la tête du piston rep1, un gicleur calibré sera monté sur l'orifice rep10 au niveau de la jupe du piston de la partie rep2, le perçage rep16 sur la partie rep2, recevra le même piétage que la partie rep1 pour définir leurs sens de montage et de centrage. La cavité creuse rep7 définira le volume réel de la chambre de succion supérieure et elle sera calculée avec précision en fonction des caractéristiques du moteur et de la pompe à vide qui seront utilisés, ainsi que les cadences de fonctionnement des pistons en fonction du nombre de tour/mn, des diamètres des tuyauteries et de leur longueur et des appareillages utilisés pour la commande. Les cavités creuses rep8 seront deux lumières en forme de demi-lunes réparties de chaque côté du diamètre intérieur de la partie rep2 qui recevra la partie rep3 en montage serrant bloque presse, elles sont réparties de cette manière, de sorte d'assurer au montage une parfaite étanchéité de cette chambre, qui répondra au même cahier des charges et exigences que la cavité creuse rep7 ci dessus. Les deux orifices rep9 seront percés calibrés ou recevra un gicleur calibré, ils permettront l'acheminement du vide ou de l'air libre.

La partie rep2 sera aussi en aluminium 1A-S12U3-5N3G, ou autre dérivé de ce type ayant les mêmes caractéristiques mécaniques, un traitement thermique de la jupe sera réalisé après l'usinage pour améliorer les caractéristiques mécaniques à la dureté et à la résistance à la chaleur de fusion par rapport à l'explosion des carburants mis en compression. Pour le mode de fonctionnement les cavités creuses rep7 et 8, pourront suivant les cas être indépendantes l'une de l'autre ou communiquer entre elles pour permettre une aspiration et une succion en continu de l'air libre par le vide ou non, car cela dépendra du type de moteur, de la dimension des pistons, et de la cadence de montée et descente des pistons en fonction de la vitesse de rotation en tour/mn, tous ces critères devront être étudiés et pris en compte.

La partie rep3 fig. A 7.7/18 forme la troisième pièce qui viendra s'emboîter dans la partie rep2 en montage serrant bloque presse, cette partie recevra l'axe rep15 et la tête de bielle, il sera impératif de monter l'axe et la bielle sur cette partie rep3 avant de la monter sur la pièce rep2. A noter que l'axe de bielle rep15 sera monté serrant bloque presse sur l'alésage de la tête de bielle et glissant très très juste sur l'alésage rep15 de la partie rep3, c'est pourquoi un traitement thermique sur ces alésages sera réalisé après l'usinage pour améliorer les caractéristiques mécaniques à la dureté et à la résistance à l'usure, la pièce rep3 sera aussi en aluminium 1A-S12U3-5N3G, ou autre dérivé de ce type ayant les mêmes caractéristique mécaniques. Une rainure en vé sur le diamètre extérieur de la partie rep3 assurera la liaison des circuits du vide et de l'air libre entre les différents circuits de cheminements rep9. Il est à noter que la circulation de l'air libre sous l'effet de la succion par le vide dans les cavités creuses des pistons permettra un refroidissement naturel de ces derniers et donc une amélioration technique non négligeable.

Nous allons maintenant prendre en compte la description du moteur hybride adaptée à tous les types de moteur et de carburant en étudiant le fonctionnement et la technologie représentée, décrite et exploitée dans les fig. A 11.11/18 à 15.15/18. La fig. A 11.11/18 représente la technologie d'un piston hybride utilisé sous l'effet et le principe du vide dans un moteur diesel six cylindres. Tout d'abord on peut expliquer le rôle et l'avantage du vide et de ce mode de piston. Un moteur six cylindres en ligne à 120° de type diesel fonctionne sous le principe d'allumage 1, 5, 3, 6, 2 et 4 ce qui permet de dire qu'il faut deux tours de vilebrequin pour allumer et exploser tous les pistons, donc trois combustions interne des pistons 2, 4 et 6 pour un premier tour de vilebrequin et 1, 3 et 5 pour le deuxième tour ( plus précisément combustion interne mais pas explosion), on peut donc dire que les pistons 1 et 6 sont toujours ensemble au PMH ou PMB, mais quand l'un est en explosion l'autre ne l'est pas, il en est de même pour les pistons 5 et 2 qui travaille ensemble et les pistons 3 et 4 qui font de même. L'avantage et l'utilisation du vide dans ce mode de fonctionnement permettent de provoquer l'action du vide sur les pistons qui travaillent ensemble, à chaque tour de vilebrequin et aussi bien en phase de montée des pistons vers le point mort haut que le point mort bas. Dans le cas d'un six cylindres, on exerce une action de sussions sous l'effet du vide, qui joue alors le rôle de turbo compresseur, sur tous les pistons énumérés en doublés ci dessus et à la fois en PMH et PMB. Comme à chaque tour de vilebrequin on a deux pistons qui sont en point mort haut alors que deux autres ce trouvent en point mort bas, l'action du vide s'exerce sur les deux pistons qui montent et les deux qui descende à chaque tour, donc sur deux tours on exerce une action sous l'effet du vide sur douze pistons, plus l'action soumise par la compression, l'allumage et l'explosion de tous les pistons sous l'effet du carburant qui est ici le gazole. De par ce principe on agit et multiplie notre force sur les pistons à raison de six poussées et douze forces d'aspiration et de sussions sur douze pistons. Cela permet d'améliorer le rendement du moteur, sa puissance, son couple, sa nervosité, son économie d'énergie ici l'essence, sa vitesse de rotation en tour/mn et surtout d'être moins polluant, donc écologique et de répondre aux normes en vigueurs définies par l'Europe. On va donc reprendre la description du piston fig. A 11.11/18, la coupe A-A montre qu'il est réalisé en trois parties qui sont assemblées par montage serrant bloque presse.

On a donc une première partie rep1 fig. A 11.11/18 la calotte du piston, avec sur une partie de la jupe, un segment coupe feu rep4 et deux segments étanches rep5, une cavité creuse rep10 recevra par emboîtement montage bloque presse la partie rep2, un perçage rep20 recevra un pied de centrage de manière a bien assemblée et dans le bon sens les parties rep1 et 2. Deux usinages rep19 auront la forme d'un vé et seront calibrés pour recevoir une bille, qui viendra obstruer l'orifice percé calibré rep22 qui communiquera avec la cavité en forme d'anneau rep8 et les circuits de vide et d'air libre rep9. La partie rep1 formant la calotte du piston sera en aluminium 1A-S12U3-5N3G, ou autre dérivé de ce type ayant les mêmes caractéristiques mécaniques, un traitement thermique de la calotte et de la jupe sera réalisé après l'usinage pour améliorer les caractéristiques mécaniques à la dureté et à la résistance à la chaleur de fusion par rapport à l'explosion des carburants mis en compression.

La partie rep2 fig. A 11.11/18 et 13.13/18 forme la deuxième partie du piston, avec un troisième segment étanche rep5 positionné au milieu de la jupe du piston, un quatrième segment étanche rep5 positionné sur la partie inférieure de la jupe du piston et juste derrière ce segment, un dernier segment racleur rep6 permettra d'assurer la lubrification et le raclage de l'huile, il permettra aussi d'assurer la lubrification de l'axe de la tête de bielle, par les orifices percés rep7. Les zones comprises entre les différents segments étanches permettront de définir les zones travaillant en position point mort haut avec l'orifice rep12 et point mort bas avec l'orifice rep13 dans la chemise rep14, quatre perçages calibrés ou positionnement de quatre gicleurs calibrés de part et d'autre de ces zones rep9 et rep1 sur la partie rep2, achemineront le vide ou l'air libre vers les cavités creuses rep10 et 8, par l'intermédiaire des orifices rep12 et 13 placés sur la chemise rep14, qui eux mêmes communiquent avec les circuits des clapets anti-retour pilotés, les électrovannes pilotés ou les injecteurs pilotés suivant les modes d'utilisations du vide et de l'air libre dans le fonctionnement et les phases de cycle du moteur et des pistons en PMH et PMB. Lors de l'assemblage de la partie rep2 sur la partie rep1 les orifices calibré en forme de vé rep19 doivent coïncider avec ceux de la tête du piston rep1, mais le pied de centrage rep20 définira cette assemblage, quatre gicleurs calibrés seront montés sur les orifices rep11 et 9 au niveau de la jupe du piston de la partie rep2, le perçage rep20 sur la partie rep2, recevra le même piétage que la partie rep1 pour définir leurs sens de montage et de centrage. La cavité creuse rep10 définira le volume réel de la chambre de succion supérieure et elle sera calculée avec précision en fonction des caractéristiques du moteur et de la pompe à vide qui seront utilisés, ainsi que les cadences de fonctionnement des pistons en fonction du nombre de tour/mn, des diamètres des tuyauteries et de leur longueur et des appareillages utilisés pour la commande. La cavité creuse rep8 formera un anneau réparti sur le diamètre extérieur de la partie rep3, un vé rep23 sera usiné calibré sur le diamètre intérieur de la partie rep2 en communication avec la cavité creuse rep10 et les perçages calibrés rep22 et 9 , la partie rep2 recevra la partie rep3 en montage serrant bloque presse, elles sont réparties de cette manière, de sorte d'assurer au montage une parfaite étanchéité de cette chambre, qui répondra au même cahier des charges et exigences que la cavité creuse rep 10 ci dessus. Les deux orifices rep11et 9 seront percés calibrés ou recevront un gicleur calibré, ils permettront l'acheminement du vide ou de l'air libre. La partie rep2 sera aussi en aluminium 1A-S12U3-SN3G, ou autre dérivé de ce type ayant les mêmes caractéristiques mécaniques, un traitement thermique de la jupe sera réalisé après l'usinage pour améliorer les caractéristiques mécaniques à la dureté et à la résistance à la chaleur de fusion par rapport à l'explosion des carburants mis en compression. Pour le mode de fonctionnement les cavités creuses rep10 et 8, pourront suivant les cas être indépendantes l'une de l'autre ou communiquer entre elles pour permettre une aspiration et une succion en continu de l'air libre par le vide ou non, car cela dépendra du type de moteur, de la dimension des pistons, et de la cadence de montée et descente des pistons en fonction de la vitesse de rotation en tour/mn, tous ces critères devront être étudiés et pris en compte pour définir le cahier des charges.

La partie rep3 fig. A 11.11/18 et 12.12/18 forme la troisième pièce qui viendra s'emboîter dans la partie rep2 en montage serrant bloque presse, cette partie recevra l'axe rep15 et la tête de bielle, il sera impératif de monter l'axe et la bielle sur cette partie rep3 avant de la monter sur la pièce rep2. A noter que l'axe de bielle rep15 sera monté serrant bloque presse sur l'alésage de la tête de bielle et glissant très très juste sur l'alésage rep15 de la partie rep3, c'est pourquoi un traitement thermique sur ces alésages rep15 fig. A 12.12/18 sera réalisé après l'usinage pour améliorer les caractéristiques mécaniques à la dureté et à la résistance à l'usure, la pièce rep3 sera aussi en aluminium 1A-S12U3-5N3G, ou autre dérivé de ce type ayant les mêmes caractéristiques mécaniques. Une rainure en vé rep17 sur le diamètre extérieur de la partie rep3 assurera la liaison des circuits du vide et de l'air libre entre les différents circuits de cheminements par les perçages calibrés rep11 et 18 et le rep11 pourront recevoir deux gicleurs calibrés le cas échéant, il en sera de même avec les perçages rep9 qui communiquent par les perçages calibrés rep22 débouchant sur le vé calibré rep23 lui même en communication avec la cavité creuse en forme d'anneau rep8. Il est à noter que la circulation de l'air libre sous l'effet de la succion par le vide dans les cavités creuses des pistons permettra un refroidissement naturel de ces derniers et donc une amélioration technique non négligeable. Lors de l'assemblage de la partie rep3 sur la partie rep2 les orifices calibré en forme de vé rep17 et les perçages calibrés rep18 et 11 doivent coïncider entre eux au montage, c'est pourquoi le pied de centrage rep21 définira cette assemblage, le perçage rep21 sur les parties rep2 et 3, recevront le même piétage pour définir leurs sens de montage et de centrage.

Il est bien entendu que le concept de moteur hybride ou MTVV, seront géré par une carte électronique, des détecteurs, des électrovannes pilotés, des injecteurs pilotés ou des clapets anti-retour commandés par pilote électromagnétique fig. A 15.15/18, sous tension 12 ou 24 volts et un ordinateur. Ce clapet a été étudié et conçu fig. A 15.15/18 pour être adapté, à la technologie du vide et aux deux différents moteurs hybride ou biénergie, pour répondre au cahier des charges, mais surtout au fait que le système ne peut pas être lubrifié, étant donné que l'on utilise des pompes à palettes sèches, il faut donc répondre à ces critères pour ne pas avoir de grippage du clapet anti-retour piloté et utiliser une technologie adaptée, suivant le concept et la matière. On peut donc trouver un plan de ce clapet, qui répond au cahier des charges demandé, ainsi qu'une désignation de toutes les pièces, dont je vais en faire une description. Le repère 01 est un perçage pour passage du câble d'alimentation pilote électro magnétique bobine 12 ou 24 volts, voir tous autres tensions à la demande. Le repère 02 est le câble d'alimentation bobine 12 ou 24 volts. Le repère 03 représente le connecteur d'alimentation bobine. Le repère 04 représente le corps du clapet anti-retour piloté. Le repère 05 est le guide de la bille du clapet. Le repère 06 est un bouchon de blocage du guide rep05 et permet le guidage du ressort rep08. Le repère 07 est un joint d'étanchéité du bouchon rep06. Le repère 08 est un ressort de poussée et de tarage de la pression sur la bille du clapet. Le repère 09 est l'orifice du vide venant des circuits réseaux. Le repère 10 est un joint lobes qui assure l'étanchéité avec le guide rep05. Le repère 11 est l'orifice du vide en aspiration venant de la pompe à vide. Le repère 12 représente la tige d'action en acier de la bobine, commandant l'ouverture du clapet en 05 millisecondes. Le repère 13 est un joint torique entre le corps du pilote rep15 et le corps du clapet rep04. Le repère 14 définis la bobine du pilote en 12 ou 24 volts voir autres suivant la demande. Le repère 15 est le corps de la bobine rep14. Le repère 16 représente une bague laiton de blocage anti-retour de la tige d'action rep12 de commande d'ouverture du clapet. On pourra dans tous les cas cités concevoir le procédé sous l'action du vide en utilisant selon les cas les zones comprises entre les différents segments étanches rep5 des pistons qui permettent de définir les zones travaillant sous l'effet du vide en PMH et PMB dans la chemise rep13 fig. A 7.7/18 ou rep14 fig. A 11.11/18 par les orifices rep11 et 12 fig. A 7.7/18 ou rep12 et 13 fig. A 11.11/18, dans ce cas on n'utilisera pas les cavités creuses rep7 et 8 fig. A 7.7/18 ou rep10 et 8 fig. A 11.11/18 des pistons, mais seulement ces zones pour exercer une succion par le vide des pistons, ces zones communiqueront entre elles pour permettre une aspiration et une succion en continue de l'air libre par le vide ou non, dans le cas d'une communication de ces zones le segment étanche central rep5 aura soit des perçages calibrés sur les flancs et la circonférence de ce segment central rep5 ou des stries usinées en forme de vé sur la circonférence extérieur de ce même segment central rep5 ceci pour permettre le communication des circuits d'air libre et du vide de ces zones délimitées pat l'étanchéité des segments étanches rep5 par rapport au piston et la chemise.

On utilisera suivant le descriptif de la Fig. A 16.16/18 une pompe hydraulique à engrenage rep1 et un circuit hydraulique avec des appareillages spécifiques de rep2 à 20, pour fournir l'énergie en mode hybride ou MTVV, au même titre que la pompe à vide, avec un réservoir Fig. A 16.16/18 rep7 de 15, 30, 60. 120 ou 240 titres à débit constant, à débit réel en charge de 1,4 à 130 l/min à puissance installée de 0,55 à 22 kW et à fréquence de rotation 150tr/min à vide, 1420 tr/min en charge avec une huile température 65 à 70° C, de viscosité 30 à 90 Cst. En observant le tableau des puissances / débits/ réservoir et par calculs dans les abaques hydraulique et autres, on définit que le système hybride ou MTVV suivant l'invention à besoin d'un débit nominal de 1,4 l/mn à 15 l/mn en utilisant la même puissance pour faire tourner la pompe rep1 soit 0.75 kW avec un bac rep7 limité de 15 1 ou 30 1 ou beaucoup moins si on travaille en circuit fermé avec le moteur, car le système hybride ou MTVV utilise une très faible quantité d'huile en circuit fermé au niveau des cavités creuses des pistons et des circuits et appareillages, sous une pression de 22 à 200 bars. Ceci dit pour un débit nominal de 6 l/mn, une puissance de 0.75 kW, un bac rep7 de 15 litres on obtient une pression maxi de 65 bars par le réducteur de pression rep10. Ce qui laisse une plage de réglage de 0 à 65 bars dans le circuit hydraulique que fournit la pompe rep1 et qui va mettre en pression les cavités creuses des pistons pour les propulser en PMH et PMB sous l'effet de la pression. Les appareillages des circuits sont définis ci après pour construire et réaliser l'ensemble de l'installation pour fonctionner et que je vais présenter.

On peut utiliser une pompe immergée ou non rep1 par entrainement direct par le moteur et poulie/ courroie rep2 suivant le mode hybride ou MTVV.

On peut utiliser un réservoir d'huile rep7 indépendant ou en circuit fermé avec le moteur en respectant les quantités limites d'huile suivant la capacité utilisé par les appareillages et le procédé pour fonctionner dans des conditions optimales et qui auront été calculées.

On installera un filtre rep5 avec clapet anti-retour sur le retour au bac ou tank circuit T2 ou utiliser le circuit rep15 de filtration du moteur.

On utilisera un filtre à air rep8 de mise à l'air libre sur le réservoir d'huile rep7.

On utilisera un réservoir rep14 sous pression taré à 55 bars dit accumulateur réserve de pression de démarrage.

On utilisera un clapet anti-retour rep3 en sortie de la haute pression de la pompe rep1 pour conserver la réserve de pression de l'accumulateur rep14 qui est taré à 55 bars lors de l'arrêt de la pompe hydraulique rep1, qui sert de réserve de démarrage.

On utilisera un clapet anti-retour rep4 en aspiration pompe pour qu'elle reste en charge après l'arrêt et pour éviter la cavitation par aspiration de bulles d'air.

On aura un contrôle de niveau d'huile, par l'indicateur rep6.

On aura en cas de manque d'huile une vanne de remplissage rep9.

On utilise deux manomètres de 0 à 100 bars à la glycérine, pour permettre le contrôle et le réglage des réducteurs de pression rep 16 taré de 0 à 30 bars et rep10 taré à 65 bars.

On utilisera des limiteurs de pression d'huile sur circuit hydraulique de type NG6 rep10 ou les options de base rep10 et 16 (voir schéma) en montage sur canalisation sur embase ou en cartouche de viscosité de 10 à 500 mm²/s de pression P = 350 bars maxi, de débit Q = 40 l/min maxi, de température du fluide de - 25 à 80° C avec des huiles hydrauliques minérales (ISO) et aussi des huiles glycol avec un % d'eau.

On utilisera des distributeurs hydrauliques rep13 19 et 20 de type NG6 de symbole 4/2 retour par ressorts à commande électrique rep12 CA 45 VA 220, 240 Volts, qui peuvent faire 18000 manoeuvres par heure. Le réducteur de pression rep16 est taré entre 0 et 30 bars par rapport à la cylindré du moteur thermique hybride, cette pression et définie par calculs suivant la puissance désirée par l'utilisateur et le moteur son réglage sera donc sécurisé par un plombage comme tous les autres appareillages prés réglés en usine suivant les modes et types d'utilisation.

Le réducteur de pression rep10 permet en fonctionnement de rejeter au bac T2 par le circuit rep15, le surplus de pression que la pompe rep1, fournit par rapport au réducteur de pression rep16 Il permet aussi de maintenir en charge l'accus rep14 taré à 55 bars, lorsque le distributeur rep13 n'est plus piloté par le rep12, ceci pour garder en charge l'accus rep14. Il est bien évident aussi que le distributeur rep13 est piloté en même temps que les distributeurs rep19 ou rep20 en alternance suivant les cycles de rotation moteur et des PMH et PMB.

Le distributeur rep19 quand il est piloté en même temps que le distributeur rep13, permet d'acheminer la pression d'huile venant du réducteur de pression rep16 et des circuits P1 et P3 du rep18 vers les pistons PMB pour donner toute la puissance en descente des pistons, le circuit retour au bac T2 et B venant du circuit retour des pistons PMH est rejeté au bac rep7 par les circuits rep15 pour éviter toute résistance opposée de l'huile.

Il en est de même pour le distributeur rep20 quand il est piloté en même temps que le distributeur rep13, il permet d'acheminer la pression d'huile venant du réducteur de rep16 et des circuits P1 et P3 du rep18 vers les pistons PMH pour donner toute la puissance en montée des pistons le circuit retour au bac T2 et B venant du circuit retour des pistons PMB et rejeté au bac rep7 par les circuits rep15 pour éviter toute résistance opposée de l'huile.

Il est bien entendu que l'on peut utiliser tous les types d'appareillages hydrauliques connus ou toutes les pompes hydrauliques connues (à pistons, à palettes et autres). Car suivant les principes et les fonctionnements les schémas hydrauliques changeront pour permettre d'alimenter et de faire fonctionner le procédé MTVV ou moteur hybride, quelque soit le type de moteur ou de carburants utilisés.

Il est certain que mon procédé permet d'utiliser toutes les sources d'énergies disponibles ou connues pour fonctionner sous le principe des pistons à cavités creuses (pompes à vide, à vapeur, hydraulique ou à air). Mais les plus adaptées semblent être le vide et l'hydraulique pour récupérer une puissance et une énergie importante, par rapport à un moteur thermique fonctionnant avec tous les types de carburants en hybride. Idem par le procédé de MTVV fonctionnant avec les aimants et le vide ou l'hydraulique suivant l'invention.

Le principe de fonctionnement et de gestion par la carte électronique du moteur hybride avec tous les types de moteurs ou de carburants ou du moteur MTVV ne change pas la technique mécanique suivant le procédé, qui reste la même au niveau de la conception des pistons et des moteurs avec une pompe à vide ou une pompe hydraulique.

L'ensemble de la technique hydraulique donne une gamme de puissance, de couple et de réserve d'énergie et d'économie sur les différentes cylindrées de moteurs très importante par l'utilisation d'une pompe hydraulique à engrenage qui a l'avantage d'être très petite donc ne pèse pas lourde et sont peu encombrante, avec des puissances en charge très petites qui donnent une plage de pression allant de 0 à 200 bars avec des quantités d'huile très réduites, donc très avantageuses pour l'utilité de mon procédé

On utilisera suivant le descriptif de la Fig. A 17.17/18 pour réguler la pression hydraulique dans les pistons à cavités creuses, un modulateur de puissance ou réducteur de pression, ou tout autre type d'appareil qui permet de réguler la pression (valve de séquence etc...), cet appareil permet de réduire la pression du réseau principal et la maintenir constante dans une partie du circuit ou de la faire varier. Ici suivant le mode du procédé utilisé, le fluide circule de B vers A. Le canal 3 permet à la pression venant de A, d'agir sur la surface du tiroir rep01. Ceci engendre une force à laquelle s'oppose la force de l'électro-aimant piloté rep04, cette tension bobine varie de 0 à X volts suivant l'accélération et la vitesse du moteur hybride tous types de carburant ou biénergie moteur temporel à variation de vitesse, plus la résistance de l'électro-aimant bobine rep04 est élevée, par une tension élevée sur la bobine, plus la pression du circuit A sera élevée, car le tiroir rep01, ne pourra pas se déplacer vers la droite et ne fermera pas le passage du fluide vers A et plus cette résistance va diminuer, par une baisse de tension sur la bobine rep04, plus la pression du circuit A baissera, car le tiroir rep01, se déplaçant vers la droite progressivement, va fermer le passage du fluide vers A, pour même s'annuler, quand la tension sur la bobine rep04 sera nulle. Ce qui permet de garantir une sécurité en cas de panne électrique ou toute autre anomalie. Lorsque la pression en A crée une force supérieure à la force de l'électro-aimant créée par la bobine rep04, le tiroir rep01 se déplace, vers la droite et ferme le passage de B vers A, ainsi le circuit A n'étant plus alimenté, la pression est réduite et reste stable, quelque soit la tension de la bobine rep04. En cas de surpression en A, le tiroir rep01, se déplace encore plus vers la droite et met en communication le circuit A avec le réservoir par l'intermédiaire du canal rep02 et du drain Y. Le réducteur de pression se monte toujours en série sur les circuits. Le réducteur dans le cas ou il n'est pas muni d'un canal interne (comme le canal rep02 sur le principe ci-dessus) dans ce cas, il est incapable d'éliminer les surpressions, donc choix à faire suivant utilisation dans les moteurs hybride tous types de carburant et en biénergie moteur temporel à variation de vitesse. Il est à noter aussi que si le fluide doit pouvoir circuler de A vers B, il faut alors choisir un réducteur de pression équipé d'un clapet anti-retour.

Il est bien entendu que la variation de la tension de la bobine électro-aimant rep04, variera en parallèle avec la vitesse de rotation du moteur, plus la vitesse de rotation du moteur sera élevée, plus la tension de la bobine rep04 sera élevée pour obtenir, une pression élevée du circuit A et inversement. Ceci dit plus on accélère le moteur, plus on fait monter la tension sur la bobine rep04, plus la vitesse sera importante, plus l'économie de carburant aussi et plus le rendement et le couple seront élevés, mais tous ces paramètres sont constants de 0 à X volts exercés sur la bobine rep04 avec la rotation moteur qui est donnée par l'accélération. Tout ce programme sera géré par l'ordinateur de bord, des cartes électronique de gestion et des capteurs ect ...Dans ce mode de circuit hydraulique on utilisera un accumulateur à vessie, qui permet d'obtenir un volume à restituer moyen, réaction rapide, bonne étanchéité et durée de vie, il permet des cycles de fréquences élevés pouvant atteindre les 120 hertz. Il sert à emmagasiner une réserve d'énergie, de stocker une quantité de fluide sous pression et la restituer, dans le cas d'une chute de pression accidentelle, compensation des fluides, équilibrage des forces. Dans ce mode de circuit on utilisera une pompe à engrenage à denture externe ou interne. Ces unités sont adaptées à des vitesses (< = 2000 tr/min) et pressions moyennes (engrenage externe >> 250-300 bar), à cylindrées fixe, prix modique, installation facile et petit encombrement, désavantage, elles sont bruyantes. C'est pourquoi on pourra aussi utiliser d'autres types de pompes exemple pompes à pistons axiaux etc ... Suivant la fig A 18.18/18, on retrouve un mode de piston hybride en deux parties rep01 et 03, avec deux cavités creuses rep A et B, réparties sur la jupe du piston rep01. Quand le piston monte vers le point mort haut (PMH), le fluide sous pression hydraulique arrive par l'orifice rep13 vers B, passe par les orifices percés calibrés rep02 et se dirige vers A, pour ressortir par l'orifice rep12 vers le drain Y de retour vers le réservoir et inversement quand le piston descend vers le pont mort bas (PMB) le fluide sous pression hydraulique passe de A vers B. Cette technique de piston peut être adoptée dans tous les types de moteur que développe la technique moteur temporel à variation de vitesse (MTVV) et moteur hybride avec tous les types de carburant. Pour ce qui est de la coupe AA, on peut utiliser un piston dit à tiroirs, comme les réducteurs de pression, on supprime donc les segments au niveau de la tête et du bas de la jupe du piston, en ne conservant que le segment central, c'est encore une autre solution du mode de piston que l'on peut utiliser.

### Désignations fig A 17.17/18

Rep01: Tiroir à pistons étanches. Rep02: Canal de communication fluide entre circuit A et circuit drain Y. Rep03: Canal de communication avec le circuit A, action du fluide sur le tiroir rep01. Rep04: Bobine électro-aimant dont la tension varie de 0 à X volts. Rep05: Corps du réducteur de pression. Rep06: Chapeau d'étanchéité, permet de monter le tiroir rep01 dans le corps rep05, assurer la communication du canal rep03 avec la chambre d'action du fluide sur le tiroir rep01. Rep07: Garnitures moulées de type C en joint franite ou tissue caoutchouté, mais aussi bague JF4, dit de type à quatre lobes. Ces joints résistent à des pressions élevées. Rep08: Chapeau permettant d'assurer l'étanchéité par serrage du joint rep07, il est vissé et bloqué par vis dans le corps rep05. Rep09: Bague auto lubrifiante montée sur le chapeau rep08, permet le guidage de l'axe du tiroir rep01, du coté du noyau de l'électro-aimant rep04. Rep10: Noyau vissé et bloqué par vis sur le chapeau rep08, supporte la bobine de l'électro-aimant rep04 et son blocage par l'écrou rep11 et la mécanindus d'arrêt rep12. Rep11: Ecrou de blocage de la bobine rep04.

Rep12: Mécanindus d'arrêt de l'écrou rep11 sur le noyau rep10. Rep13: Boîtier d'alimentation et de connextion des fils du câble, fixé sur bobine rep04. Rep14: Presse étoupe de passage et blocage du câble d'alimentation de la bobine rep04.

## Revendications

1. Procédé de moteur temporel à variation de vitesse, basé sur le principe de la thermo dynamique, en utilisant le vide par succion, en aspirant les pistons, vers le PMH et PMB , alternativement avec des néodymes au fer bore ou samarium cobalt à flux opposés, conjuguées et complémentaires pour entraîner ce moteur en rotation ( ces aimants sont inaltérables, résistent à des température de 300° et la mécanique du moteur sera usée avant les aimants, qui ne perdent pas de leurs puissance et efficacité durant une vie d'homme en respectant les règles de fonctionnements). Il est bien entendu, est très important, que les aimants positionnés sur les alésages au niveau des chemises et opposés au flux magnétique de ceux positionnés sur le piston, soient du double de longueur des aimants du piston pour permettre, une poussée avec un maximum de rendement et de puissance, sans trop de perte d'énergie. Les deux actions sont fournies et réalisables, par l'intermédiaire de deux pistons plongeurs, l'un étant le piston relié à l'embiellage et le vilebrequin et l'autre piston dit plongeur, en contact permanent avec la came de l'arbre à cames qui permet un mouvement uniformément ralenti, accéléré, décéléré ou nul, il fait donc varier la vitesse par son action direct sur le piston plongeur. Cet arbre à cames peut être doté d'un diviseur manuel, d'un moteur pas à pas rotatif électrique ou hydraulique, il est doté de cames suivant le nombre de pistons en ligne, en vé, ou en étoile de moteurs de tous types, ces cames ont un point haut et un point bas de came dit zéro, qui correspond à une vitesse ou un type de mouvement nul, suivant la position entre les deux, cela correspond à un mouvement uniformément accéléré ou décéléré suivant le sens de rotation de l'arbre à cames, qui n'est plus entrainé par le moteur. Des segments étanches de part et d'autre des pistons assurent le guidage, l'étanchéité et le graissage de l'ensemble du système pendant ces phases de fonctionnement. Voyons maintenant la disposition des aimants et leurs rôles dans le système en conjugaison avec le vide, aimants inaltérables et résistants à des températures de 300°. On trouve tout d'abord des aimants disposés sur la circonférence des diamètres des chemises de la culasse en position supérieur et inférieur, des diamètres extérieur et intérieur, supérieurs du piston plongeur et des diamètres du piston principal d'embiellage en position supérieur et inférieur de ce dernier, des aimants percés centralement sont aussi placés sur la calotte intérieur du piston plongeur, ainsi que sur la calotte supérieur du piston principal d'embiellage. Tous les aimants sont placés à une position déterminée dans le concept technologique de manière à travailler avec son vis-à-vis en opposition de flux magnétique dans chaque phase de fonctionnement en position PMH ou PMB, suivant les périodes de ralenti, d'accélération ou décélération donné par la position du piston plongeur, qui est commandé par l'arbre à cames, cela permet de faire varier le chevauchement transversal des aimants, plus ou moins, générant ainsi un effort de poussée transversal, plus ou moins puissant, faisant varier de la sorte la vitesse de rotation du moteur, ce dernier faisant tourner une pompe à vide qui restitue son énergie, l'énergie fourni à la pompe à vide pour tourner, peut provenir d'une source extérieur pouvant être branchée sur du 230V, alimentée par une batterie et un transfos, des capteurs solaires ou par le moteur, cette pompe à vide restitue son énergie de la même manière que le moteur hybride décrit ci-dessus, en chargeant l'énergie généré par la pompe à vide dans un réservoir de vide. L'action du vide joue la aussi le rôle de turbo compresseur, mais l'inertie que l'action du vide donne aux pistons moteur en phase finale du PMH et PMB avant de s'annuler, permet d'amener le piston principal correspondant, avec ces différents aimants en phase d'opposition des flux magnétiques pour permettre ensuite l'éjection du piston principal, sous l'effet de leurs poussées opposées et transversales. Ce concept de moteur permet des économies importantes d'énergie, il est silencieux et non polluant, à cela vient s'ajouter son rendement, sa puissance, son autonomie et sa nervosité. Il permet aussi de restituer son énergie thermique et de l'emmagasiner par un échangeur thermique, pour alimenter un chauffage ou une production d'eau chaude. Ce type de moteur peut fournir aussi de l'énergie électrique en faisant tourner un groupe électrogène, alternateur ou tout autre installation de même type.

2. Procédé selon la revendication 1 **caractérisé en ce que** les figures A 1.1/18 à 6.6/18 portent sur un moteur deux temps de bateau à variation de vitesse, doté d'un vilebrequin, de bielles, de pistons, d'une culasse, d'un arbres à cames, d'un moteur hydraulique ou électrique rotatif pas à pas qui transformeront les mouvements rotatifs en mouvements transversaux pour donner en sortie de vilebrequin un mouvement rotatif ralenti, accéléré ou décéléré suivant les positions données dans l'espace temps aux points mort haut et bas (PMH et PMB) des pistons qui peuvent travailler en ligne, en vé ou même en étoile pour permettre un équilibrage du moteur sur les positions des pistons et des bielles au tour des paliers du vilebrequin en position mort haut et bas (PMH et PMB) pendant le fonctionnement et dans un espace temps donné, suivant d'autres types de moteur à x cylindre ou de x forme. Une pompe à vide est couplée en direct sur l'arbre creux cannelé du vilebrequin, elle permettra de charger un accu de vide ou d'alimenter en direct les circuits du vide, elle peut être alimentée pour fonctionner par toutes les sources d'énergie possible extérieurs. Ce système et procédé remplacera le turbo compresseur et permettra d'apporter au moteur à un temps et une position donnés en point mort haut ou bas accéléré (PMHA ou PMBA) une énergie et propulsion supplémentaire au mouvement rotatif du moteur, donc une puissance plus importante. L'énergie est le principe de base du moteur et il sera fourni aussi par des flux magnétiques propulseurs appelés aimants (néodyme au fer bore ou samarium cobalt), répartis et synchronisés de manière à donner un mouvement alternatif ralenti, accéléré ou décéléré de chaque piston à un espace temps donné. La régulation automatique des distances entre les flux magnétiques propulseurs est étudiée et définie par le principe de fonctionnement qui est conçu ici par deux pistons plongeurs coulissant l'un dans l'autre en mouvements alternatifs transversaux opposés, mouvement donné pour l'un par l'arbre à cames et la position de ces cames , définie par un moteur hydraulique ou électrique rotatif pas à pas ou d'un diviseur à commande manuelle ou tout autre moyen de commande et de l'autre piston dont le mouvement est donné par la résultante et les composantes des forces des flux magnétiques propulseurs qui en découlent et permettent la rotation du vilebrequin, dont les aimants à flux magnétiques propulseurs opposés ( rep4,7,8 et 10 de la fig. A 1.1/18) agissent sur leurs vis à vis aimants (rep101, 6, 9 et 109 de la fig. A 1.1/18) de manière à rendre fonctionnel et dynamique le système, en respectant judicieusement toutes les positions des aimants par rapport aux phases de travail du moteur, aux fins de générer les forces résultantes et composantes des flux magnétiques propulseurs opposés suivant les pôles des aimants qui se repoussent entre eux. Il est bien entendu que les réglages seront réalisés de manière que les aimants se chevauchent seulement sur les ¾ de leurs vis à vis aimant à pôles opposés, de manière à provoquer la propulsion dans le sens ou le mouvement est attendu pour assurer le mouvement en translation qui va se transformer en rotatif. Ce chevauchement varie continuellement passant d'un état minimum à maximum, ce qui fait varier les forces engendrées par les aimants sur la vitesse du moteur. Ce procédé de deux pistons plongeurs coulissant l'un dans l'autre, dans une chemise, donne la possibilité et l'avantage sous l'action de l'arbre à came en rotation qui joue le rôle d'accélérateur en faisant varier la position transversale du piston plongeur rep3, qui bénéficient ainsi de deux types de propulsion en point mort haut et bas (PMH et PMB).

3. Procédé selon la revendication 1 ou 2 **caractérisé en ce que** l'effet du vide est fourni par une pompe à vide, une installation permet d'assurer la distribution, la commande, la détection et la réserve du vide vers les pistons. Après chaque phase d'action du vide en PMH et PMB sur les pistons, une mise à l'air libre des circuits est assurée, pour annuler le vide et régénérer en air les cavités creuses conçues dans les pistons en aluminium qui vont permettre leurs succions par des orifices et des segments étanches positionnés de part et d'autre de la jupe des pistons et des deux cavités creuses étanches en position supérieure et inférieure dans le piston. Les cavités creuses pourront être indépendantes l'une de l'autre dans le fonctionnement du vide et de l'air libre ou communiquer entre elles pour permettre l'aspiration du vide et de l'air libre en continu sur une extrémité ou l'autre suivant l'action du vide en PMH ou PMB. A chaque tour de vilebrequin sur un quatre cylindres, deux pistons se trouvent en PMH, alors que les deux autres sont en PMB. L'action du vide s'exerce sur les deux pistons en PMH et PMB, simultanément et inversement à chaque tour de vilebrequin, ce qui est un sérieux avantage, pour augmenter le rendement, la puissance, la nervosité et le nombre de tour par minute du moteur l'effet du vide joue alors le rôle d'un turbo compresseur, en assurant un refroidissement naturel des pistons, il en est de même pour le moteur deux temps ici décrit. La seule perte étant celle de l'installation et de la pompe à vide qui fait trois chevaux. A la différence du moteur thermique à quatre cylindres, ou la compression et l'explosion de chaque piston se fait suivant l'ordre 1-3-4-2 sur deux tours de vilebrequin, l'effet du vide lui s'exerce à chaque tour sur tous les pistons, aussi bien en montée qu'en descente. Deux orifices sont positionnés avec précision sur la chemise suivant chaque phase de travail des pistons et permettront le cheminement du vide vers les circuits PMH et PMB, par deux tuyauteries soudées sur la chemise à l'emplacement des orifices correspondants. Ce cycle se répétera suivant chaque tour de vilebrequin de la même manière et en continu ou seul la vitesse de rotation variera suivant le ralenti, l'accéléré et le super accéléré ou aussi en associant l'accéléré et le super accéléré, c'est à dire l'énergie qui est le vide et les flux magnétiques propulseurs opposés fonctionnant ensemble et en continu suivant le principe du ralenti, de l'accéléré et du décéléré. L'énergie thermique que produisent tous les éléments mécaniques du moteur par frottement et rotation est récupérée par un circuit de refroidissement (échangeur thermique) en position basse du moteur, pour alimenter une unité de chauffage centrale et une production d'eau chaude sanitaire dans tous les domaines. Ce moteur pourra le cas échéant faire tourner une installation pour produire de l'électricité. On se rend compte du potentiel énorme du vide dans le fonctionnement d'un moteur, en association avec l'énergie des flux magnétiques propulseurs qui peuvent se cumuler avec d'autres énergies comme l'air avec le compresseur et l'eau, l'huile avec les pompes. Ce procédé par la résultante et les composantes des forces des flux magnétiques propulseurs est utilisé dans le domaine des cycles à deux roues ou l'on transforme de la même manière un mouvement transversal en mouvement rotatif par rapport à un axe de pédalier et son excentrique qui transforme ce mouvement par l'intermédiaire d'un appareil mécanique à flux magnétiques propulseurs définis identique à l'application du moteur temporel à variation de vitesse.

4. Procédé selon la revendication 2 ou 3 **caractérisé en ce que** l'on connaît déjà différents types de moteur, les agencements du type cité qui découlent par exemple, des documents fig. A 1.1/18 ou encore des fig. A 2.2 à 6.6/18 représentant les fonctionnements d'ensemble des systèmes d'application décrits, ils permettent de transformer et transmettre un mouvement transversal à des pistons pour obtenir en sortie un mouvement rotatif d'un vilebrequin, souhaitable dans de nombreuses applications pour permettre d'entraîner en rotation, n'importe quel appareil ou machine qui demande à tourner pour fournir un travail, mais qui ne peut pas le faire seul. Ce procédé de moteur fournit l'énergie complémentaire par une pompe à vide, la capacité et la puissance de cette énergie stockée par cette pompe est utilisé comme un turbo compresseur pour obtenir une puissance complémentaire à un temps donné du fonctionnement et de la position du piston en point mort haut et bas (PMH et PMB). L'énergie de base permettant de faire tourner la machine est donnée par la résultante et les composantes des forces des flux magnétiques propulseurs. Utilisés et placés judicieusement et avec précision pour obtenir une rotation équilibrée du moteur, une rotation au ralenti, en accéléré ou en décélération. L'inconvénient mais aussi l'avantage de ces flux magnétiques propulseurs, c'est que l'interchangeabilité de ces éléments pourra se faire sans problème au moment voulu soit sur le moteur ou réaliser un échange standard, l'avantage de ce procédé et type de moteur, est de ne pas être polluant, écologique, silencieux et de conjuguer puissance et autonomie. L'avantage n'on négligeable aussi de ce type de moteur est de pouvoir récupérer l'énergie thermique que tous les éléments mécaniques produisent par frottement et rotation, l'élaboration du circuit de refroidissement tel que réalisé dans le système par la circulation d'une huile très fluide récupérera les calories thermiques que l'on utilisera pour alimenter et chauffer une unité de chauffage central et une production d'eau chaude sanitaire. La conception, la technique, les besoins et les résultats attendus et restitués de ce principe d'énergie dans la situation et le contexte actuel de la planète terre par rapport à la demande croissante du pétrole, qui ne peut pas être comblé par la production actuelle et le manque de gisement, devenu de plus en plus rare ou difficilement exploitable, donc très chers, vaut la peine d'être exploité et commercialisé dans tous ces domaines.

5. Procédé selon la revendication 3 ou 4 **caractérisé en ce que** le problème que la présente invention se propose de résoudre, réside dans la conception d'un moteur fonctionnant sans combustible avec une énergie propre, une autonomie et une puissance qui peut rivaliser avec le moteur thermique essence, diesel ou gaz, mais dans d'autres domaines comme les éoliennes pour fournir de l'électricité, le chauffage, mais aussi la climatisation pour les habitations et l'industrie des trains et des tramways de la nouvelle génération, cela réside dans l'amélioration des énergies renouvelables et écologiques de manière à contribuer à la protection de la terre en installant de manière simple et sur un espace réduit avec des investissements bien fondés et peu coûteux, le dispositif de moteur temporel à variation de vitesse associé aux machines qu'il entraînera pour fournir de l'énergie sous différentes formes pour éviter les inconvénients évoqués des agencements connus du moteur thermique conventionnel sur la pollution et le réchauffement climatique. Il est bien entendu que tous les types de moteur, de tous les types de carburants peuvent être utilisés pour élaborer le système MTVV, ici utilisé sur un moteur de bateau deux temps. Ce concept résout et améliore aussi les conditions de déplacement en cycle à deux roues des personnes ayant un handicap physique ou du à une maladie. Il permet donc d'économiser les matières premières, comme le pétrole, le gaz et de diminuer à long terme l'utilisation du nucléaire et de rendre autonome chaque habitation dans ces besoins d'électricité, de chauffage et de production d'eau chaude sanitaire. Il se propose donc de résoudre de nombreux problèmes dans différents secteurs d'activité. Dans l'invention, la solution de ce problème consiste, pour un moteur temporel à variation de vitesse, conjuguant puissance et autonomie, pour un moteur de type cité, à prévoir deux pistons disposés en opposés pour transformer un mouvement rotatif en sortie de vilebrequin sensiblement égal sans trop de pertes de rendement. On peut équiper ce moteur d'un nombre d'ensemble de pistons indéterminé en ligne, en vé ou en étoile suivant les encombrements et les espaces déterminés par le type de moteur. Cela consiste aussi à prévoir un circuit de refroidissement pouvant être utilisé en chauffage et en production d'eau chaude externe ou en circuit de lubrification interne du moteur. Ainsi que deux énergies, propres au fonctionnement du moteur, voir un circuit utilisant le vide stocké dans un ou des accus ou en direct par une pompe à vide et la résultante et les composantes des forces des flux magnétiques propulseurs fournies par des aimants, qui sont utilisés pour permettre son fonctionnement. D'ou un arbre à cames avec des cames excentrées en lignes qui agissent sur les pistons par l'intermédiaire d'un moteur hydraulique ou électrique rotatif pas à pas ou ici d'un diviseur manuel, commandé et programmé par l'utilisateur. Ce même piston est doté d'un aimant à flux magnétiques propulseurs opposés ayant une action axiale et d'un ensemble d'aimants à flux magnétiques propulseurs opposés ayant une action radiale, bien définie dans un espace temps donné, il est doté de deux segments extérieurs en position haute et de deux segments en position basse, pour assurer l'étanchéité et le guidage entre les différents éléments du concept mécanique. Un perçage sur ce même piston en position haute assurera la liaison avec le circuit de vide de la pompe à vide, deux aimants l'un positionné sur la chemise et l'autre sur ce piston permettront de repousser continuellement ce piston en contact avec la came excentrique de l'arbre à cames. Un perçage dans la chemise de la cavité supérieure de la culasse et de la chemise qui assure le refroidissement, permettra d'assurer la lubrification des segments qui ne peuvent pas l'être. Le piston en liaison avec la bielle du vilebrequin sera doté d'un ensemble d'éléments permettant de monter des ensembles d'aimants, l'un à flux magnétiques propulseurs opposés ayant une action axiale sur l'autre piston, il sera calibré par un perçage en son centre pour permettre le phénomène de sussions sous l'effet du vide à une position et un temps donné en point mort haut et d'un ensemble d'aimants à flux magnétiques opposés propulseurs en position supérieure ayant une action radiale bien définie dans un espace temps donné par rapport à l'aimant radial de l'autre piston en position supérieure. On retrouve un autre ensemble d'aimants à flux magnétiques propulseurs opposés sur le piston de bielle en son milieu ayant une action radiale bien définie dans un espace temps donné du point mort bas par rapport à un autre ensemble d'aimants à flux magnétiques propulseurs opposés à action radiale placés dans le corps intérieur de la chemise en position basse dans des alvéoles obtenues lors de l'usinage et du montage. Un perçage calibré (gicleurs ou autres) dans le piston en position basse communicant avec la chambre de sussions du vide communique avec un autre perçage calibré, réalisé dans la chemise en position basse pour permettre la mise à l'air de cette chambre ou l'utilisation du circuit du vide en position point mort bas par des circuits externes. Bien que l'on puisse aussi tirer profit du circuit de refroidissement sur ce type de moteur, paraît quand même être un sérieux avantage pour une production d'eau chaude sanitaire et un chauffage central, car la conception du circuit de lubrification et refroidissement dans toute la culasse et les chemises permet de récupérer l'énergie thermique que tous les éléments mécaniques produisent par frottements et rotations, par son élaboration du circuit tel que réalisé dans le système en faisant circuler une huile très fluide qui récupérera les calories thermiques au passage, par l'intermédiaire d'un échangeur thermique pour les restituer et utiliser sous différentes formes et besoins. Bien que l'on puisse évidement changer au besoin après un certain temps d'utilisation, tous les aimants permanent de type, néodyme au fer bore ou samarium cobalt, ces aimants sont inaltérables, résistent à des températures de 300° et la mécanique du moteur sera usée avant les aimants, qui ne perdent pas de leurs puissance et efficacité durant une vie de vingt années garantie, en respectant les règles de fonctionnements. Il est certain que cela ne pose pas de problème, car on procédera à un échange standard du moteur et de tous ses aimants étant démontables, ainsi que tous ses organes d'usures, on récupérera seulement les organes vitaux qui ne subissent pas de détérioration et d'usure. Mais il est certain que les organes mécaniques tel que roulements, joints d'étanchéité, segments d'étanchéité etc, seront usés et considérés comme n'étant plus fonctionnels avant même la fin de vie des aimants. Ce procédé de moteur garde donc son avantage fonctionnel et innovant, dont le rendement et tout à fait reconnu et assuré dans le temps sur sa rentabilité.

6. Procédé selon l'une quelconque des revendications précédentes **caractérisé en ce que** la description du moteur hybride adaptée à tous les types de moteur et de carburant en étudiant le fonctionnement et la technologie représentée, décrite et exploitée dans les fig. A 7.7/18 à 10.10/18. La fig. A 7.7/18 représente la technologie d'un piston hybride utilisé sous l'effet et le principe du vide dans un moteur quatre cylindres. Un moteur quatre cylindres en ligne de tous les types fonctionne sous le principe d'allumages 1, 3,4 et 2, ce qui permet de dire qu'il faut deux tours de vilebrequin pour allumer et exploser tous les pistons. L'avantage et l'utilisation du vide dans ce mode de fonctionnement permettent de provoquer l'action du vide sur chaque piston, à chaque tour de vilebrequin et aussi bien en phase de montée ou descente du piston vers le point mort haut ou le point mort bas. On exerce donc une action de sussions sous l'effet du vide, qui joue alors le rôle de turbo compresseur, sur tous les pistons. Comme à chaque tour de vilebrequin on a deux pistons qui sont en point mort haut alors que les deux autres ce trouvent en point mort bas, l'action du vide s'exerce sur les deux pistons qui montent et les deux qui descende à chaque tour, donc sur deux tours on exerce une action sous l'effet du vide sur huit pistons, plus l'action soumise par la combustion interne de tous les pistons sous l'effet du carburant utilisé et du type de moteur. De par ce principe on agit et multiplie notre force sur les pistons à raison de quatre poussées et huit forces d'aspiration et de sussions sur huit pistons. Cela permet d'améliorer le rendement du moteur, sa puissance, son couple, sa nervosité, son économie d'énergie, sa vitesse de rotation en tour/mn et surtout d'être moins polluant, donc écologique et de répondre aux normes en vigueurs définies par l'Europe. Suivant la description du piston fig. A 7.7/18, la coupe A-A montre qu'il est réalisé en trois parties qui sont assemblées par montage serrant bloque presse. On a donc une première partie rep1 fig. A 7.7/18 la calotte du piston, avec sur une partie de la jupe, un segment coupe feu rep4 et un segment étanche rep5, une cavité creuse rep7 recevra par emboîtement montage bloque presse la partie rep2, un perçage rep16 recevra un pied de centrage de manière a bien assemblée et dans le bon sens les parties rep1 et 2.Deux usinages rep10 auront la forme d'un vé et seront calibrés et définis par calculs suivant les critères du cahier des charges du moteur type et des résultats à obtenir, ces orifices permettront l'acheminement du vide et de l'air libre à l'intérieur de la cavité creuse rep7. La partie rep2 fig. A 7.7/18 forme la deuxième partie du piston, avec un deuxième segment étanche rep5 positionné au milieu de la jupe du piston, un troisième segment étanche rep5 est positionné sur la partie inférieure de la jupe du piston et juste derrière ce segment, un dernier segment racleur rep6 permettra d'assurer la lubrification et le raclage de l'huile, il permettra aussi d'assurer la lubrification de l'axe de la tête de bielle, par les orifices percés rep14. Les zone comprises entre les différents segments étanches permettront de définir les zones travaillant sous l'effet du vide en position point mort haut et bas dans la chemise rep13, quatre perçages calibrés ou positionnement de quatre gicleurs calibrés de part et d'autre de ces zones rep9 et rep10, achemineront le vide ou l'air libre vers les cavités creuses rep7 et 8, par l'intermédiaire des orifices rep11 et 12 placés sur la chemise rep13, qui eux mêmes communiquent avec les circuits des clapets anti-retour pilotés, les électrovannes pilotés ou les injecteurs pilotés suivant les modes d'utilisations du vide et de l'air libre dans le fonctionnement et les phases de cycle du moteur et des pistons en PMH et PMB. Lors de l'assemblage de la partie rep2 sur la partie rep1 les orifices percés et calibré rep10 doivent coïncider avec ceux de la tête du piston rep1, un gicleur calibré sera monté sur l'orifice rep10 au niveau de la jupe du piston de la partie rep2, le perçage rep16 sur la partie rep2, recevra le même piétage que la partie rep1 pour définir leurs sens de montage et de centrage. La cavité creuse rep7 définira le volume réel de la chambre de succion supérieure et elle sera calculée avec précision en fonction des caractéristiques du moteur et de la pompe à vide qui seront utilisés, ainsi que les cadences de fonctionnement des pistons en fonction du nombre de tour/mn, des diamètres des tuyauteries et de leur longueur et des appareillages utilisés pour la commande. Les cavités creuses rep8 seront deux lumières en forme de demi-lunes réparties de chaque côté du diamètre intérieur de la partie rep2 qui recevra la partie rep3 en montage serrant bloque presse, elles sont réparties de cette manière, de sorte d'assurer au montage une parfaite étanchéité de cette chambre, qui répondra au même cahier des charges et exigences que la cavité creuse rep7 ci dessus. Les deux orifices rep9 seront percés calibrés ou recevra un gicleur calibré, ils permettront l'acheminement du vide ou de l'air libre. Pour le mode de fonctionnement les cavités creuses rep7 et 8, pourront suivant les cas être indépendantes l'une de l'autre ou communiquer entre elles pour permettre une aspiration et une succion en continu de l'air libre par le vide ou non, car cela dépendra du type de moteur, de la dimension des pistons, et de la cadence de montée et descente des pistons en fonction de la vitesse de rotation en tour/mn, tous ces critères devront être étudiés et pris en compte. La partie rep3 fig. A 7.7/18 forme la troisième pièce qui viendra s'emboîter dans la partie rep2 en montage serrant bloque presse, cette partie recevra l'axe rep15 et la tête de bielle, il sera impératif de monter l'axe et la bielle sur cette partie rep3 avant de la monter sur la pièce rep2. A noter que l'axe de bielle rep15 sera monté serrant bloque presse sur l'alésage de la tête de bielle et glissant très très juste sur l'alésage rep15 de la partie rep3, c'est pourquoi un traitement thermique sur ces alésages sera réalisé après l'usinage pour améliorer les caractéristiques mécaniques à la dureté et à l'usure. Une rainure en vé sur le diamètre extérieur de la partie rep3 assurera la liaison des circuits du vide et de l'air libre entre les différents circuits de cheminements rep9. Il est à noter que la circulation de l'air libre sous l'effet de la succion par le vide dans les cavités creuses des pistons permettra un refroidissement naturel de ces derniers. Idem pour les cavités creuses, elles pourront être de toutes les formes possibles et elles seront étudiées suivant les types de moteur et de carburant. Les trois parties du piston seront en aluminium 1A-S12U3-5N3G, ou autre dérivé de ce type ayant les mêmes caractéristiques mécaniques, un traitement thermique de la jupe, de la calotte et des alésages de l'axe du pied de bielle du piston seront réalisés après l'usinage pour améliorer les caractéristiques mécaniques à la dureté, à l'usure et à la résistance à la chaleur de fusion par rapport à l'explosion des carburants mis en compression, quelque soit les types et les modes de piston.

7. Procédé selon l'une quelconque des revendications précédentes **caractérisé en ce que** la description du moteur hybride adaptée à tous les types de moteur et de carburant en étudiant le fonctionnement et la technologie représentée, décrite et exploitée dans les fig. A 11.11/18 à 15.15/18. La fig. A 11.11/18 représente la technologie d'un piston hybride utilisé sous l'effet et le principe du vide dans un moteur diesel six cylindres. Tout d'abord on peut expliquer le rôle et l'avantage du vide et de ce mode de piston. Un moteur six cylindres en ligne à 120° de type diesel fonctionne sous le principe d'allumage 1, 5, 3, 6, 2 et 4 ce qui permet de dire qu'il faut deux tours de vilebrequin pour allumer et exploser tous les pistons, donc trois combustions interne des pistons 2, 4 et 6 pour un premier tour de vilebrequin et 1, 3 et 5 pour le deuxième tour ( plus précisément combustion interne mais pas explosion), on peut donc dire que les pistons 1 et 6 sont toujours ensemble au PMH ou PMB, mais quand l'un est en explosion l'autre ne l'est pas, il en est de même pour les pistons 5 et 2 qui travaille ensemble et les pistons 3 et 4 qui font de même. L'avantage et l'utilisation du vide dans ce mode de fonctionnement permettent de provoquer l'action du vide sur les pistons qui travaillent ensemble, à chaque tour de vilebrequin et aussi bien en phase de montée des pistons vers le point mort haut que le point mort bas. Dans le cas d'un six cylindres, on exerce une action de sussions sous l'effet du vide, qui joue alors le rôle de turbo compresseur, sur tous les pistons énumérés en doublés ci dessus et à la fois en PMH et PMB. Comme à chaque tour de vilebrequin suivant un angle de 120° on a deux pistons qui sont en point mort haut alors que deux autres ce trouvent en point mort bas, dont un aura une combustion interne et l'autre pas, ceci multiplié par trois, donc sur deux tours on exerce une action sous l'effet du vide sur douze pistons, plus l'action soumise par la compression, l'allumage et l'explosion de tous les pistons sous l'effet du carburant qui est ici le gazole. De par ce principe on agit et multiplie notre force sur les pistons à raison de six poussées et douze forces d'aspiration et de sussions sur douze pistons. Cela permet d'améliorer le rendement du moteur, sa puissance, son couple, sa nervosité, son économie d'énergie ici l'essence, sa vitesse de rotation en tour/mn et surtout d'être moins polluant, donc écologique et de répondre aux normes en vigueurs définies par l'Europe. On va donc reprendre la description du piston fig. A 11.11/18, la coupe A-A montre qu'il est réalisé en trois parties qui sont assemblées par montage serrant bloque presse. On a donc une première partie rep1 fig. A 11.11/18 la calotte du piston, avec sur une partie de la jupe, un segment coupe feu rep4 et deux segments étanches rep5, une cavité creuse rep10 recevra par emboîtement montage bloque presse la partie rep2, un perçage rep20 recevra un pied de centrage de manière a bien assemblée et dans le bon sens les parties rep1 et 2. Deux usinages rep19 auront la forme d'un vé et seront calibrés pour recevoir une bille, qui viendra obstruer l'orifice percé calibré rep22 qui communiquera avec la cavité en forme d'anneau rep8 et les circuits de vide et d'air libre rep9.La partie rep2 fig. A 11.11/18 et 13.13/18 forme la deuxième partie du piston, avec un troisième segment étanche rep5 positionné au milieu de la jupe du piston, un quatrième segment étanche rep5 positionné sur la partie inférieure de la jupe du piston et juste derrière ce segment, un dernier segment racleur rep6 permettra d'assurer la lubrification et le raclage de l'huile, il permettra aussi d'assurer la lubrification de l'axe de la tête de bielle, par les orifices percés rep7. Les zones comprises entre les différents segments étanches permettront de définir les zones travaillant en position point mort haut avec l'orifice rep12 et point mort bas avec l'orifice rep13 dans la chemise rep14, quatre perçages calibrés ou positionnement de quatre gicleurs calibrés de part et d'autre de ces zones rep9 et rep11 sur la partie rep2, achemineront le vide ou l'air libre vers les cavités creuses rep10 et 8, par l'intermédiaire des orifices rep12 et 13 placés sur la chemise rep14, qui eux mêmes communiquent avec les circuits des clapets anti-retour pilotés, les électrovannes pilotés ou les injecteurs pilotés suivant les modes d'utilisations du vide et de l'air libre dans le fonctionnement et les phases de cycle du moteur et des pistons en PMH et PMB. Lors de l'assemblage de la partie rep2 sur la partie rep1 les orifices calibré en forme de vé rep19 doivent coïncider avec ceux de la tête du piston rep1, mais le pied de centrage rep20 définira cette assemblage, quatre gicleurs calibrés seront montés sur les orifices rep11 et 9 au niveau de la jupe du piston de la partie rep2, le perçage rep20 sur la partie rep2, recevra le même piétage que la partie rep1 pour définir leurs sens de montage et de centrage. La cavité creuse rep10 définira le volume réel de la chambre de succion supérieure. La cavité creuse rep8 formera un anneau réparti sur le diamètre extérieur de la partie rep3, un vé rep23 sera usiné calibré sur le diamètre intérieur de la partie rep2 en communication avec la cavité creuse rep10 et les perçages calibrés rep22 et 9 , la partie rep2 recevra la partie rep3 en montage serrant bloque presse, elles sont réparties de cette manière, de sorte d'assurer au montage une parfaite étanchéité de cette chambre, qui répondra au même cahier des charges et exigences que la cavité creuse rep10 ci dessus. Les deux orifices rep11 et 9 seront percés calibrés ou recevront un gicleur calibré, ils permettront l'acheminement du vide ou de l'air libre. Pour le mode de fonctionnement les cavités creuses rep10 et 8, pourront suivant les cas être indépendantes l'une de l'autre ou communiquer entre elles. La partie rep3 fig. A 11.11/18 et 12.12/18 forme la troisième pièce qui viendra s'emboîter dans la partie rep2 en montage serrant bloque presse, cette partie recevra l'axe rep15 et la tête de bielle, il sera impératif de monter l'axe et la bielle sur cette partie rep3 avant de la monter sur la pièce rep2. A noter que l'axe de bielle rep15 sera monté serrant bloque presse sur l'alésage de la tête de bielle et glissant très très juste sur l'alésage rep15 de la partie rep3. Une rainure en vé rep17 sur le diamètre extérieur de la partie rep3 assurera la liaison des circuits du vide et de l'air libre entre les différents circuits de cheminements par les perçages calibrés rep11 et 18 et le rep11 pourront recevoir deux gicleurs calibrés le cas échéant, il en sera de même avec les perçages rep9 qui communiquent par les perçages calibrés rep22 débouchant sur le vé calibré rep23 lui même en communication avec la cavité creuse en forme d'anneau rep8.Lors de l'assemblage de la partie rep3 sur la partie rep2 les orifices calibré en forme de vé rep17 et les perçages calibrés rep18 et 11 doivent coïncider entre eux au montage, c'est pourquoi le pied de centrage rep21 définira cette assemblage, le perçage rep21 sur les parties rep2 et 3, recevront le même piétage pour définir leurs sens de montage et de centrage.

8. Procédé selon l'une quelconque des revendications **caractérisé en ce qu'**il est bien entendu que le concept de moteur hybride ou MTVV, seront géré par une carte électronique, des détecteurs, des électrovannes pilotés, des injecteurs pilotés ou des clapets anti-retour commandés par pilote électromagnétique fig. A 15.15/18, sous tension 12, 24 volts ou toute autre tension et un ordinateur. Ce clapet a été étudié et conçu fig. A 15.15/18 pour être adapté, à la technologie du vide et aux deux différents moteurs hybride ou biénergie, pour répondre au cahier des charges, mais surtout au fait que le système ne peut pas être lubrifié, étant donné que l'on utilise des pompes à palettes sèches, il faut donc répondre à ces critères pour ne pas avoir de grippage du clapet anti-retour piloté et utiliser une technologie adaptée, suivant le concept et la matière, donc utiliser des appareils compatibles. On peut donc trouver un plan de ce clapet, qui répond au cahier des charges demandé. Le pilote électro magnétique est doté d'une bobine 12 ou 24 volts, voir tous autres tensions à la demande. Le repère 04 représente le corps du clapet anti-retour piloté. Le repère 05 est le guide de la bille du clapet. Le repère 06 est un bouchon de blocage du guide rep05 et permet le guidage du ressort rep08. Le repère 08 est un ressort de poussée et de tarage de la pression sur la bille du clapet. Le repère 09 est l'orifice du vide venant des circuits réseaux. Le repère 11 est l'orifice du vide en aspiration venant de la pompe à vide. Le repère 12 représente la tige d'action en acier de la bobine, commandant l'ouverture du clapet en 05 millisecondes. Le repère 16 représente une bague laiton de blocage anti-retour de la tige d'action rep12 de commande d'ouverture du clapet. On pourra dans tous les cas cités concevoir le procédé sous l'action du vide en utilisant selon les cas les zones comprises entre les différents segments étanches rep5 des pistons qui permettent de définir les zones travaillant sous l'effet du vide en PMH et PMB dans la chemise rep13 fig. A 7.7/18 ou rep14 fig. A 11.11/18 par les orifices rep11 et 12 fig. A 7.7/18 ou rep12 et 13 fig. A 11.11/18, dans ce cas on n'utilisera pas les cavités creuses rep7 et 8 fig. A 7.7/18 ou rep10 et 8 fig. A 11.11/18 des pistons, mais seulement ces zones pour exercer une succion par le vide des pistons, ces zones communiqueront entre elles pour permettre une aspiration et une succion en continue de l'air libre par le vide ou non, dans le cas d'une communication de ces zones le segment étanche central rep5 aura soit des perçages calibrés sur les flancs et la circonférence de ce segment central rep5 ou des stries usinées en forme de vé sur la circonférence extérieur de ce même segment central rep5 ceci pour permettre le communication des circuits d'air libre et du vide de ces zones délimitées pat l'étanchéité des segments étanches rep5 par rapport au piston et la chemise.

9. Procédé selon l'une quelconque des revendications **caractérisé en ce qu'**il est bien entendu que le concept de moteur hybride ou MTVV selon le descriptif de la fig. A 16.16/18, une pompe hydraulique à engrenage rep1 et un circuit hydraulique avec des appareillages spécifiques du rep2 à 20, pour fournir l'énergie en mode hybride ou MTVV au même titre que la pompe à vide, avec un réservoir Fig. A 16.16/18 rep7 de 15, 30, 60 120 ou 240 litres à débit constant, à débit réel en charge de 1,4 à 130 1/min à puissance installée de 0,55 à 22 kW et à fréquence de rotation 1500tr/min à vide, 1420 tr/min en charge avec une huile température 65 à 70° C, de viscosité 30 à 90 Cst. En observant le tableau des puissances / débits/ réservoir et par calculs dans les abaques hydraulique et autres, on définit que le système hybride ou MTVV suivant l'invention à besoin d'un débit nominal de 1,4 1/mn à 15 l/mn en utilisant la même puissance pour faire tourner la pompe rep1 soit 0.75 kW avec un bac rep7 limité de 15 1 ou 30 1 ou beaucoup moins si on travaille en circuit fermé avec le moteur car le système hybride ou MTVV utilise une très faible quantité d'huile en circuit fermé au niveau des cavités creuses des pistons et des circuits et appareillages, sous une pression de 22 à 200 bars Ceci dit pour un débit nominal de 6 l/mn, une puissance de 0,75 kW, un bac rep7 de 15 litres on obtient une pression maxi de 65 bars par le réducteur de pression rep10. Ce qui laisse une plage de réglage de 0 à 65 bars dans le circuit hydraulique que fournit la pompe rep1 et qui va mettre en pression les cavités creuses des pistons pour les propulser en PMH et PMB sous l'effet de la pression Les appareillages des circuits sont définis ci après pour construire et réaliser l'ensemble de l'installation pour fonctionner et que je vais présenter On peut utiliser une pompe immergée ou non rep1 par entrainement direct par le moteur et poulie/ courroie rep2 suivant le mode hybride ou MTVV. On peut utiliser un réservoir d'huile rep7 indépendant ou en circuit fermé avec le moteur en respectant les quantités limites d'huile suivant la capacité utilisé par les appareillages et le procédé pour fonctionner dans des conditions optimales et qui auront été calculées On installera un filtre rep5 avec clapet anti-retour sur le retour au bac ou tank circuit T2 ou utiliser le circuit rep15 de filtration du moteur. On utilisera un filtre à air rep8 de mise à l'air libre sur le réservoir d'huile rep7. On utilisera un réservoir rep14 sous pression taré à 55 bars dit accumulateur réserve de pression de démarrage. On utilisera un clapet anti-retour rep3 en sortie de la haute pression de la pompe rep1 pour conserver la réserve de pression de l'accumulateur rep14 qui est taré à 55 bars lors de l'arrêt de la pompe hydraulique rep1, qui sert de réserve de démarrage. On utilisera un clapet anti-retour rep4 en aspiration pompe, pour qu'elle reste en charge après l'arrêt et pour éviter la cavitation par aspiration de bulles d'air. On aura un contrôle de niveau d'huile par l'indicateur rep6. On aura en cas de manque d'huile une vanne de remplissage rep9. On utilise deux manomètres de 0 à 100 bars à la glycérine, pour permettre le contrôle et le réglage des réducteurs de pression rep16 taré de 0 à 30 bars et rep10 taré à 65 bars. On utilisera des limiteurs de pression d'huile sur circuit hydraulique de type NG6 rep10 ou les options de base rep10 et 16 (voir schéma) en montage sur canalisation, sur embase, ou en cartouche de viscosité de 10 à 500 mm²/s de pression P = 350 bars maxi, de débit Q = 40 1/min maxi, de température du fluide de - 25 à 80° C avec des huiles hydrauliques minérales (ISO) et aussi des huiles glycol avec un % d'eau. On utilisera des distributeurs hydrauliques rep13 19 et 20 de type NG6 de symbole 4/2 retour par ressorts à commande électrique rep12 CA 45 VA 220, 240 Volts, qui peuvent faire 18000 manoeuvres par heure. Le réducteur de pression rep16 est taré entre 0 et 30 bars par rapport à la cylindré du moteur thermique hybride, cette pression et définie par calculs suivant la puissance désirée par l'utilisateur et le moteur son réglage sera donc sécurisé par un plombage, comme tous les autres appareillages prés réglés en usine suivant les modes et types d'utilisation. Le réducteur de pression rep10 permet en fonctionnement de rejeter au bac T2 par le circuit rep15, le surplus de pression que la pompe rep1, fournit par rapport au réducteur de pression rep16. Il permet aussi de maintenir en charge l'accus rep14 taré à 55 bars, lorsque le distributeur rep13 n'est plus piloté par le rep12, ceci pour garder en charge l'accus rep14. Il est bien évident aussi que le distributeur rep13 est piloté en même temps que les distributeurs rep19 ou rep20 en alternance suivant les cycles de rotation moteur et des PMH et PMB. Le distributeur rep19 quand il est piloté en même temps que le distributeur rep13, permet d'acheminer la pression d'huile venant du réducteur de pression rep16 et des circuits P1 et P3 du rep18 vers les pistons PMB pour donner toute la puissance en descente des pistons le circuit retour au bac T2 et B venant du circuit retour des pistons PMH est rejeté au bac rep7 par les circuits rep15 pour éviter toute résistance opposée de l'huile. Il en est de même pour le distributeur rep20 quand il est piloté en même temps que le distributeur rep13, il permet d'acheminer la pression d'huile venant du réducteur de rep16 et des circuits P1 et P3 du rep18 vers les pistons PMH pour donner toute la puissance en montée des pistons, le circuit retour au bac T2 et B venant du circuit retour des pistons PMB et rejeté au bac rep7 par les circuits rep15 pour éviter toute résistance opposée de l'huile Il est bien entendu que l'on peut utiliser tous les types d'appareillages hydrauliques connus ou toutes les pompes hydrauliques connues (à pistons, à palettes et autres). Car suivant les principes et les fonctionnements les schémas hydrauliques changeront pour permettre d'alimenter et de faire fonctionner le procédé MTVV ou moteur hybride quelque soit le type de moteur ou de carburants utilisés. Il est certain que mon procédé permet d'utiliser toutes les sources d'énergies disponibles ou connues pour fonctionner sous le principe des pistons à cavités creuses (pompes à vide à vapeur, hydraulique ou à air). Mais les plus adaptées semblent être le vide et l'hydraulique pour récupérer une puissance et une énergie importante, par rapport à un moteur thermique fonctionnant avec tous les types de carburants en hybride. Idem par le procédé de MTVV fonctionnant avec les aimants et le vide ou l'hydraulique suivant l'invention. Le principe de fonctionnement et de gestion par la carte électronique du moteur hybride avec tous les types de moteurs ou de carburants ou du moteur MTVV ne change pas la technique mécanique suivant le procédé, qui reste le même au niveau de la conception des pistons et des moteurs avec une pompe à vide ou une pompe hydraulique. L'ensemble de la technique hydraulique donne une gamme de puissance, de couple et de réserve d'énergie et d'économie sur les différentes cylindrées de moteurs très importante par l'utilisation d'une pompe hydraulique à engrenage qui a l'avantage d'être très petite, donc ne pèse pas lourde et sont peu encombrante, avec des puissances en charge très petites qui donnent une plage de pression allant de 0 à 200 bars avec des quantités d'huile très réduites, donc très avantageuses pour l'utilité de mon procédé.

10. Procédé selon l'une quelconque des revendications **caractérisé en ce qu**'il est bien entendu que le concept de moteur hybride ou MTVV selon le descriptif de la fig. A 17.17/18, pour réguler la pression hydraulique dans les pistons à cavités creuses, un modulateur de puissance ou réducteur de pression, ou tout autre type d'appareil qui permet de réguler la pression (valve de séquence etc...), cet appareil permet de réduire la pression du réseau principal et la maintenir constante dans une partie du circuit ou de la faire varier, ce mode d'appareil a une pression variable de 0 à X bars, ce qui en fait son innovation. Ici suivant le mode du procédé utilisé, le fluide circule de B vers A. Le canal 3 permet à la pression venant de A, d'agir sur la surface du tiroir rep01. Ceci engendre une force à laquelle s'oppose la force de l'électro-aimant piloté rep04, cette tension bobine varie de 0 à X volts suivant l'accélération et la vitesse du moteur hybride tous types de carburant ou biénergie moteur temporel à variation de vitesse, plus la résistance de l'électro-aimant bobine rep04 est élevée, par une tension élevée sur la bobine, plus la pression du circuit A sera élevée, car le tiroir rep01, ne pourra pas se déplacer vers la droite et ne fermera pas le passage du fluide vers A et plus cette résistance va diminuer, par une baisse de tension sur la bobine rep04, plus la pression du circuit A baissera, car le tiroir rep01, se déplaçant vers la droite progressivement, va fermer le passage du fluide vers A, pour même s'annuler, quand la tension sur la bobine rep04 sera nulle. Ce qui permet de garantir une sécurité en cas de panne électrique ou toute autre anomalie. Lorsque la pression en A crée une force supérieure à la force de l'électro-aimant créée par la bobine rep04, le tiroir rep01 se déplace, vers la droite et ferme le passage de B vers A, ainsi le circuit A n'étant plus alimenté, la pression est réduite et reste stable, quelque soit la tension de la bobine rep04. En cas de surpression en A, le tiroir rep01, se déplace encore plus vers la droite et met en communication le circuit A avec le réservoir par l'intermédiaire du canal rep02 et du drain Y. Le réducteur de pression se monte toujours en série sur les circuits. Le réducteur dans le cas ou il n'est pas muni d'un canal interne (comme le canal rep02 sur le principe ci-dessus) dans ce cas, il est incapable d'éliminer les surpressions, donc choix à faire suivant utilisation dans les moteurs hybride tous types de carburant et en biénergie moteur temporel à variation de vitesse. Il est à noter aussi que si le fluide doit pouvoir circuler de A vers B, il faut alors choisir un réducteur de pression équipé d'un clapet anti-retour. Il est bien entendu que la variation de la tension de la bobine électro-aimant rep04, variera en parallèle avec la vitesse de rotation du moteur, plus la vitesse de rotation du moteur sera élevée, plus la tension de la bobine rep04 sera élevée pour obtenir, une pression élevée du circuit A et inversement. Ceci dit plus on accélère le moteur, plus on fait monter la tension sur la bobine rep04, plus la vitesse sera importante, plus l'économie de carburant aussi et plus le rendement et le couple seront élevés, mais tous ces paramètres sont constants de 0 à X volts exercés sur la bobine rep04 avec la rotation moteur qui est donnée par l'accélération. Tout ce programme sera géré par l'ordinateur de bord, des cartes électronique de gestion et des capteurs ect ...Dans ce mode de circuit hydraulique on utilisera un accumulateur à vessie, qui permet d'obtenir un volume à restituer moyen, réaction rapide, bonne étanchéité et durée de vie, il permet des cycles de fréquences élevés pouvant atteindre les 120 hertz. Il sert à emmagasiner une réserve d'énergie, de stocker une quantité de fluide sous pression et la restituer, dans le cas d'une chute de pression accidentelle, compensation des fluides, équilibrage des forces, mais d'autres accumulateurs peuvent être utilisés. Dans ce mode de circuit on utilisera une pompe à engrenage à denture externe ou interne. Ces unités sont adaptées à des vitesses (< = 2000 tr/min) et pressions moyennes (engrenage externe >> 250-300 bar), à cylindrées fixe, prix modique, installation facile et petit encombrement, désavantage, elles sont bruyantes. C'est pourquoi on pourra aussi utiliser d'autres types de pompes exemple pompes à pistons axiaux etc ... Suivant la fig A 18.18/18, on retrouve un mode de piston hybride en deux parties rep01 et 03, avec deux cavités creuses rep A et B, réparties sur la jupe du piston rep01. Quand le piston monte vers le point mort haut (PMH), le fluide sous pression hydraulique arrive par l'orifice rep13 vers B, passe par les orifices percés calibrés rep02 et se dirige vers A, pour ressortir par l'orifice rep12 vers le drain Y de retour vers le réservoir et inversement, quand le piston descend vers le pont mort bas (PMB) le fluide sous pression hydraulique passe de A vers B. Cette technique de piston peut être adoptée dans tous les types de moteur que développe la technique moteur temporel à variation de vitesse (MTVV) et moteur hybride avec tous les types de carburant. Pour ce qui est de la coupe AA, on peut utiliser un piston dit à tiroirs, comme les réducteurs de pression, on supprime donc les segments au niveau de la tête et du bas de la jupe du piston, en ne conservant que le segment central, c'est encore une autre solution du mode de piston que l'on peut utiliser.

11. Procédé selon la revendication 5 **caractérisé en ce que** le procédé dans un autre mode de réalisation de l'invention un moteur thermique ne peut pas se suffire à lui même pour fonctionner, il utilise à ce jour de l'énergie tel que le pétrole, le gazole ou le gaz, ce qui s'avère coûteux et polluant, sans compter que les ressources naturelles diminuent et on ne peut pas envisager l'utilisation du nucléaire. Mais dorénavant la résultante et les composantes des forces des flux magnétiques propulseurs opposés dépassent le rendement attendu pour résoudre ces problèmes et permettent le fonctionnement d'un moteur conjuguant puissance et autonomie, avec des avantages ne pas être polluant, silencieux et écologique. Dans un mode de réalisation de l'invention particulièrement préféré, on associera une énergie complémentaire obtenue par une pompe à vide qui stocke cette énergie dans des accus ou branchée en directe pour la restituer au fonctionnement du moteur, ce système et procédé remplacera le turbo compresseur et permettra d'apporter au moteur à un temps et une position donné en point mort haut ou bas accéléré (PMHA ou PMBA) une énergie et propulsion supplémentaire, donc une puissance plus importante au moteur ce qui s'avère avantageux, étant donné que la pompe à vide peut tourner indépendamment. On peut donc en période de nuit ou de jour charger les accus de vide pour garantir une autonomie en continue. Dans ce mode de réalisation de l'invention telle que décrite et particulièrement préféré au moteur thermique plus bruyant. Il en résulte une construction très simple, dont le fonctionnement est fiable, mais il a surtout l'avantage d'être silencieux de par sa conception. Le descriptif de l'aimant rep6 fig. A 1.1/18 a défini son rôle sur le piston rep1 fig. A 1.1/18 par rapport à l'aimant rep7 fig. A 1.1/18 dans d'autres descriptifs ci dessus qui ont permis de définir leurs rôles respectifs l'un par rapport à l'autre. Il est bien entendu que tous les aimants en forme de queue d'aronde en biseau conique permettront leur blocage avec les pièces respectives, mais pourront avoir d'autres formes, de ce fait des petites incurvées percées ou usinées de forme concave ou autres intérieures sur leurs champs pour permettre leurs blocages, ils seront suivant les cas et les possibilités de montage, de forme en demi lune, en plusieurs aimants individuel ou en anneau suivant les types, toutes les formes sont possibles. Le descriptif du piston rep3 fig. A 1.1/18 et 2.2/18 pour définir ces phases de travail et ces opérations d'usinage, tout d'abord ce piston sera en alliage d'aluminium 1A-S12U3-5N3G ou autres dérivés de ce type ayant les mêmes caractéristiques mécaniques, brut de fonderie par moulage de carotte. Un logement recevra des aimants en forme de queue d'aronde en biseau conique rep7 fig. A 1.1/18 et 2.2/18 montés pour permettre leurs blocages et réalisés pour que les champs magnétiques se repoussent avec les aimants rep6 fig. A 1.1/18 du piston rep1 qui seront sollicités en point mort haut ralenti et accéléré pour agir en poussée sur le piston rep1 fig. A 1.1/18 et transmettre sa force pour permettre la rotation du vilebrequin. Les segments rep17 assureront le guidage et l'étanchéité avec la chemise de la culasse rep5 fig. A 1.1/18 et 6.6/18. Le logement fileté recevra une bague laiton ou aluminium standard rep14, qui elle même recevra est bloquera par serrage un aimant rep10 fig. A 1.1/18 et 2.2/18 entre une bague rep12 en laiton ou aluminium, on pourra donc régler la position de l'aimant qui sera percé en son centre au diamètre de 5mm pour permettre l'action du vide, en plaçant respectivement des bagues usinées d'un coté ou de l'autre de l'aimant, ce dernier est monté et réalisé pour que les champs magnétiques se repoussent avec l'aimant rep109 fig. A 1.1/18 du piston rep1 qui seront sollicités en point mort haut accéléré ou ralenti, pour agir en poussée sur le piston rep1 fig. A 1.1/18 et 3.3/18 et transmettre ainsi leur force pour permettre la rotation du vilebrequin. Un embout fileté rep66 sera vissé et monté au scelle roulement dans le piston rep3 fig. A 1.1/18 doté d'un taraudage et recevra la pièce rep15 fig. A 1.1/18 cette pièce sera en acier et subira une trempe, elle aussi montée au scelle roulement. Pour ce qui est de la forme en queue d'aronde usinée cylindriquement en biseaux coniques et formée par l'assemblage de la bague de blocage rep103 sur le piston rep3 et les pièces rep66 et 15 fig. A 1.1/18, elle recevra des aimants rep101 fig. A 1.1/18 et 2.2/18 montés pour se bloquer et réalisés pour que les champs magnétiques se repoussent avec l'aimant rep4 fig. A 1.1/18 pour maintenir le piston rep3 fig. A 1.1/18 par l'intermédiaire de la pièce repl5 fig. A 1.1/18 en contact ponctuel et permanent avec les cames A et B rep30 fig. A 1.1/18, qui elles seront aussi en acier et subiront une trempe.
